# EUROPÄISCHE PATENTSCHRIFT

(11) **EP 3 662 150 B1**
(45) Veröffentlichungstag und Bekanntmachung des Hinweises auf die Patenterteilung: **30.06.2021**
(21) Anmeldenummer: 18759842.0
(22) Anmeldetag: 29.07.2018
(51) Int. Cl.: F01N 3/00, F02M 25/12, F02M 27/04

(54) **PLASMAAPPLIKATOR ZUR BEHANDLUNG EINES GASES SOWIE VERFAHREN ZUR SCHADSTOFFREDUKTION BEI VERBRENNUNGSPROZESSEN**
PLASMA APPLICATOR FOR TREATING A GAS AND METHOD FOR EMISSION REDUCTION OF COMBUSTION PROCESSES
APPLICATEUR PLASMA POUR LE TRAITEMENT D'UN GAZ ET PROCÉDÉ DE RÉDUCTION D'ÉMISSIONS DES PROCÉDÉS DE COMBUSTION

(30) Priorität: 31.07.2017 DE 102017117349
(43) Veröffentlichungstag der Anmeldung: 10.06.2020
(73) Patentinhaber: Cingu GmbH, 53340 Meckenheim (DE)
(72) Erfinder: KOSTER, Norbert, 47057 Duisburg (DE); TRICK, Michael, 53505 Berg (DE)
(74) Vertreter: Körfer, Thomas
(86) Internationale Anmeldenummer: PCT/DE2018/100671
(87) Internationale Veröffentlichungsnummer: WO 2019/024961

(56) Entgegenhaltungen:
- EP-A1- 1 058 778
- EP-A1- 1 254 304
- EP-A1- 1 375 851
- EP-A1- 2 067 758
- DE-A1-102014 110 789
- US-B1- 6 517 786
- US-B2- 7 767 166

## Beschreibung

### TECHNISCHES GEBIET DER ERFINDUNG

Die Erfindung betrifft einen Plasmaapplikator zur Behandlung eines Gases in einem durch Anlegen einer Wechselspannung zwischen einer Außenelektrode und einer Innenelektrode gebildeten Feldraum. Bei dem Gas handelt es sich vorzugsweise um Luft, die einer Verbrennungsmaschine, insbesondere einem Verbrennungsmotor, zugeführt wird, es kann sich aber auch um Abgase handeln.

Die Erfindung betrifft auch ein Verfahren zur Schadstoffreduktion bei Verbrennungsprozessen unter Verwendung eines erfindungsgemäßen Plasmaapplikators sowie die Verwendung eines oder mehrerer solcher Plasmaapplikatoren in einer Applikatoranordnung, bei einem Verbrennungsmotor und bei einem Fahrzeug mit einem Verbrennungsmotor.

### HINTERGRUND DER ERFINDUNG

Die Reduktion von bei Verbrennungsprozessen insbesondere in Innenstädten entstehenden Schadstoffen ist eine Aufgabe, die aus verschiedenen Gründen ständig an Bedeutung gewinnt. Aktuell werden z.B. Fahrverbote für Dieselfahrzeuge zumindest in Innenstädten diskutiert, wenngleich auch Fahrzeuge mit Benzinmotoren und insbesondere Schweröl verbrennende Schiffsmotoren Schadstoffe wie z.B. Stickoxide produzieren.

Zur Reduktion von Schadstoffen bei Verbrennungsprozessen, insbesondere bei Verbrennungsprozessen in Verbrennungsmotoren, wurden in den letzten Jahren und Jahrzehnten unzählige Verfahren und Vorrichtungen vorgeschlagen, die mit mehr oder weniger großem Aufwand in mehr oder weniger großem Maße zur Schadstoffreduktion beitragen können, wobei sowohl vorgeschlagen wurde, die bei der Verbrennung entstehenden Abgase auf unterschiedlichste Art und Weise zu reinigen, als auch die Effizienz der Verbrennung durch Behandlung des bei der Verbrennung eingesetzten Gases, in der Regel also Luft, zu erhöhen. So ist seit vielen Jahren bekannt, dass die chemische Reaktivität von in der Luft enthaltenem Sauerstoff durch Behandlung der Luft in einem elektrischen Feld erhöht werden kann. Man spricht gemeinhin von "Aktivierung" des Sauerstoffs, wobei durch ein starkes elektrisches Feld in einem entsprechenden Plasmaapplikator beim Durchleiten von Luft ein Plasma erzeugt wird, was dann wiederum die Bildung von hoch reaktivem sogenanntem Singulett-Sauerstoff führt. Der "aktivierte" Sauerstoff kann sowohl bei der Verbrennung als auch bei der Abgasreinigung eingesetzt werden.

Bei der Abgasreinigung mit aktiviertem Sauerstoff unterscheidet man zwei Arten von Verfahren:
- das sog. Injektionsverfahren, bei dem ein von einem Plasma angeregter Luftstrom mit einem zu reinigenden Abgasstrom vermischt wird, wodurch Schadstoffmoleküle zu ungiftigeren Substanzen umgewandelt werden können, und
- das sog. Direktverfahren, bei dem der Abgasstrom direkt durch die Kammer geleitet wird, in der das Plasma erzeugt wird.

Bei beiden Verfahren können durch die Zuführung elektrischer Energie jedoch auch unerwünschte Substanzen wie Ozon oder Stickoxide, so dass bei beiden Verfahren noch weitere Filterstufen nachgeschaltet werden.

Die Druckschriften DE 10 2008 034 732 A1 und JP 209-174410 A beschreiben Plasmaapplikatoren zur Verwendung in einem Verbrennungsmotor, bei dem der Sauerstoff vor der Einleitung in eine Brennkammer aktiviert wird, wobei die Plasmaapplikatoren zur Steuerung ein Drosselventil und Gasregelventil benötigt
Eine demgegenüber deutlich einfachere Ausgestaltung eines Plasmaapplikators lehrt die JP 2007-107491 A, die derzeit als nächstkommender Stand der Technik angesehen wird und bei der ein zu behandelndes Gas, insbesondere einem Verbrennungsmotor zuzuführende Luft, durch einen zwischen einer Innenelektrode und einer Außenelektrode gebildeten Feldraum geführt wird. Weitere Plasmareaktoren für Verbrennungskraftmaschinen finden sich in den Publikationen: EP 1058778 A1, EP 2067758 A1, US 6517786 B1, DE 102014110789 A1 und US 7767166 B2.

### OFFENBARUNG DER ERFINDUNG

Es hat sich gezeigt, dass die bekannten Plasmaapplikatoren konstruktionsbedingt sehr hohe Spannungen benötigen, um eine zur Erzeugung des das durchgeleitete Gas aktivierenden Plasmas benötigte Feldstärke aufzubauen. Konstruktionsbedingt ist die Oberfläche der Innenelektrode im Vergleich zu der ihr gegenüberliegenden Innenfläche der Außenelektrode sehr klein, so dass Plasma praktisch nur rund um die Innenelektrode erzeugt wird.

Zur Erzeugung entsprechender Feldstärken benötigen die bekannten Plasmaapplikatoren eine sehr hohe Leistung, die typischerweise von der Lichtmaschine eines Verbrennungsmotors erzeugt werden muss, was wiederum den Kraftstoffverbrauch und damit die Schadstoffproduktion, die eigentlich gesenkt werden sollen, erhöht.

Ein weiteres bislang nicht befriedigend gelöstes Problem ist, dass die bekannten Plasmaapplikatoren im Betrieb sehr heiß werden. Zudem ist das in der gewünschten Weise aktivierte Gas, in der Regel also der in der Luft befindliche Sauerstoff, zwar in der gewünschten Weise hoch reaktiv, dies führt jedoch dazu, dass er auch, wenn er z.B. eingeatmet wird, für Menschen und Tiere extrem schädlich ist, so dass die Menge des aktivierten Sauerstoffs genau kontrolliert werden muss. Zur Lösung dieses Problems wurden deshalb aufwändige Drossel- und Regelklappen vorgeschlagen, was jedoch zu Lasten einer kompakten und nachrüstbaren Bauweise geht und den Steuerungsaufwand erhöht.

Davon ausgehend liegt der Erfindung die Aufgabe zugrunde, einen verbesserten Plasmaapplikator anzugeben, der bei kompakter und kostengünstiger Bauweise die Erzeugung des zur Aktivierung benötigten Plasmas mit verhältnismäßig geringen Spannungen ermöglicht und der zudem über eine verbesserte Kühlung verfügt.

Der Erfindung liegt auch die Aufgabe zugrunde, eine Applikatoranordnung anzugeben, die insbesondere bei Verbrennungsmotoren von Fahrzeugen eingesetzt und dort auch leicht nachgerüstet werden kann.

Der Erfindung liegt ferner die Aufgabe zugrunde, ein Verfahren zur Schadstoffreduktion bei Verbrennungsprozessen anzugeben.

Die genannten Aufgaben werden gelöst von einem Plasmaapplikator mit den Merkmalen des Anspruchs 1 bzw. einer Applikatoranordnung mit den Merkmalen des Anspruchs 17 und einem Verfahren mit den Merkmalen des Anspruchs 25. Vorteilhafte Ausgestaltungen und Weiterbildungen der Erfindung sind Gegenstand der jeweiligen Unteransprüche. Die nebengeordneten Ansprüche 23 und 24 betreffen einen Verbrennungsmotor bzw. ein Fahrzeug mit einem erfindungsgemäßen Plasmaapplikator bzw. einer erfindungsgemäßen Applikatoranordnung.

Die Erfindung beruht auf der Grundidee, keine massive Innenelektrode, sondern vielmehr eine nach Art der rohrförmigen Außenelektrode ausgebildete rohrförmige Innenelektrode einzusetzen, in der ein Innenraum gebildet ist, durch den ein Teil des zu behandelnden Gases strömen kann, was mehrere Probleme löst. So führt das Durchströmen eines Teils der zu behandelnden Luft durch die Innenelektrode zu einer Kühlung des Plasmaapplikators. Die rohrförmige Ausgestaltung erlaubt es, die Außenfläche der Innenelektrode an die Innenfläche der Außenelektrode anzunähern und so die Feldstärke in dem Feldraum zwischen den beiden Elektroden stark zu vergleichmäßigen, so dass bereits mit verhältnismäßig geringen Spannungen z.B. im Bereich von etwa 50.000 V, also etwa einem Viertel der bislang bei Plasmaapplikatoren der hier in Frage stehenden Art typischen Spannungen, Plasma in ausreichender Menge erzeugt werden kann. Durch Variationen der Spannung kann die Menge des erzeugten Plasmas sehr genau eingestellt werden, und die Erfindung ermöglicht es, ohne gesonderte Ventile oder Klappen das mit dem Plasma behandelte Gas mit unbehandeltem Gas zu durchmischen, um so sicherzustellen, dass die im jeweiligen Einsatzfall benötigte Menge aktivierten Gases zur Verfügung steht.

Dabei sei auf dieser Stelle daraufhingewiesen, dass der Begriff "rohrförmig" bzw. "als hohles Rohr ausgebildet" im allgemeinsten Sinne zu verstehen ist und keinesfalls auf z.B. kreiszylindrische Rohre beschränkt ist. Vielmehr werden unter den Begriffen alle Arten länglicher Hohlkörper verstanden, insbesondere natürlich aufgrund ihrer einfachen Herstellbarkeit zylindrische und vor allem kreiszylindrische Rohre, wobei die länglichen Hohlkörper natürlich auch beliebige andere Querschnittsformen, z.B. sechs- oder mehreckige, haben können. Auch müssen sie nicht im mathematischen Sinne zylindrisch, d.h. durch Parallelverschiebung einer wie auch immer gearteten Grundfläche, entstanden sein, sondern können gestufte Abschnitte oder konische Abschnitte umfassen. In der einfachsten Ausführungsform bilden die Innen- und die Außenelektrode elektrisch gesehen einen Zylinderkondensator.

Bei einer bevorzugten Ausführungsform ist die Innenelektrode mit einer Vielzahl von Öffnungen versehen, um im Betrieb des Plasmaapplikators einen Gasübertritt von dem Innenraum der Innenelektrode zum Feldraum, also dem Raum zwischen der Außenseite der Innenelektrode und der Innenseite der Außenelektrode, zu ermöglichen. Damit ergibt sich eine besonders gute Durchmischung behandelten und unbehandelten Gases, typischerweise also aktivierten und nicht-aktivierten Sauerstoffs, so dass der Applikator bei sehr kompakter Bauweise die z.B. bei einem Kraftfahrzeugmotor benötigte, die Verbrennung begünstigende Menge aktivierten Sauerstoffs bereitstellen kann.

Wenn solche Öffnungen vorgesehen werden, so können sie vorteilhaft einen zur Außenelektrode vorstehenden Rand aufweisen, wie er z.B. durch Einschlagen der Öffnungen in ein die Innenelektrode bildendes Blech entsteht. Die Öffnungen werden also nicht ausgestanzt oder spanabhebend gebohrt, da der vorstehende Rand die Bildung sogenannter Plasmafilamente begünstigt und ähnlich wie ein Kondensationskeim bei der Kondensation wirkt.

Wenngleich die Innen- und die Außenelektrode nicht symmetrisch und/oder konzentrisch angeordnet sein müssen, so sind sie bei einer bevorzugten Ausführungsform doch in Form von konzentrischen Rohren ausgebildet, vorzugsweise in Form zylindrischer, insbesondere kreiszylindrischer Rohre mit jeweils zwei Stirnseiten und jeweils einer Mantelfläche.

Wenn die Innenelektrode und die Außenelektrode Stirnseiten besitzen, können diese Stirnseiten vorteilhaft offen sein und somit das Ein- und Ausströmen von Gas in den Innenraum der Innenelektrode und den zwischen der Innenelektrode und der Außenelektrode gebildeten Feldraum zu erlauben, so dass auf besondere Gaseinlass- und Auslassmittel vorteilhaft verzichtet werden kann.

Die Ausgestaltung der Innenelektrode als hohles Rohr ermöglicht es, das Volumen des Innenraumes der Innenelektrode größer zu gestalten als das Volumen des Feldraumes. Mit anderen Worten nähert sich die Größe der Außenfläche der Innenelektrode der Größe der Innenfläche der Außenelektrode an, so dass die Elektroden idealerweise nahezu eine Art "umlaufenden Plattenkondensator" bilden, bei dem die Feldstärke im Feldraum nahezu konstant ist.

Der dielektrische Isolator, der z.B. aus Silikon oder einem keramischen Material bestehen kann, kann an nahezu beliebiger Stelle zwischen der Innenelektrode und der Außenelektrode angeordnet werden, wird jedoch typischerweise entweder direkt auf der Außenfläche der Innenelektrode oder aber, was derzeit bevorzugt ist, direkt auf der Innenfläche der Außenelektrode angeordnet. Es versteht sich von selbst, dass dann, wenn der dielektrische Isolator auf der Außenfläche der Innenelektrode angeordnet und die Innenelektrode in der bevorzugten Weise mit Öffnungen zum Hindurchtreten von Gas vom Innenraum der Elektrode zum Feldraum und umgekehrt versehen ist, auch der dielektrische Isolator solche Öffnungen aufweisen muss.

Bei einer besonders bevorzugten Ausführungsform sind in dem Feldraum eine Vielzahl von dielektrischen Brücken zwischen der Innenelektrode und dem dielektrischen Isolator und/oder zwischen dem dielektrischen Isolator und der Außenelektrode angeordnet. Solche dielektrischen Brücken begünstigen, wie nachfolgend noch detailliert dargelegt werden wird, die Ausbildung von Plasmafäden im Feldraum und können vorteilhaft eine Doppelfunktion ausüben, da sie in einfacher Weise als Halterungen für die Innenelektrode ausgebildet werden können. Die Wirkung der Brücken kann vorteilhaft vergrößert werden, wenn sie mit einer oberflächenvergrößernden Struktur, z.B. einer Rillierung o.dgl. versehen werden. Die Brücken können nach Art von Abstandshaltern nur an bestimmten Stellen im Feldraum vorgesehen werden, bevorzugt ist jedoch, dass sie sich entlang der kompletten Innenelektrode erstrecken. Die dielektrischen Brücken können einstückig am dielektrischen Isolator angeformt sein.

Weitere Einzelheiten und Vorteile der Erfindung ergeben sich aus der nachfolgenden, rein beispielhaften und nicht beschränkenden Beschreibung von Ausführungsbeispielen zusammen mit der zwölf Figuren umfassenden Zeichnung.

### KURZE BESCHREIBUNG DER ZEICHNUNGEN

- Fig. 1: zeigt die Positionierung eines Plasmaapplikators im Zuluftkanal einer Verbrennungsmaschine.
- Fig. 2: zeigt die prinzipiellen Funktionen der elektrischen Schaltung der Wechselspannungsquelle in Zusammenwirkung mit dem Applikator.
- Fig. 3: zeigt einen Querschnitt durch ein erstes Ausführungsbeispiel eines Applikators.
- Fig. 4: zeigt einen Querschnitt durch ein zweites Ausführungsbeispiel eines Applikators mit den eingezeichneten Radien zur Erläuterung des Prinzips.
- Fig. 5: zeigt einen Querschnitt durch ein drittes Ausführungsbeispiel eines Applikators.
- Fig. 6: zeigt einen Querschnitt durch ein viertes Ausführungsbeispiel eines Applikators.
- Fig. 7: zeigt einen aus Messungen generierten erster Verlauf der Stickoxidkonzentration im Abgas.
- Fig. 8: zeigt einen aus Messungen generierter zweiten Verlauf der Stickoxidkonzentration im Abgas.
- Fig. 9: zeugt schematisch den prinzipiellen Zusammenhang zwischen der dem Applikator zugeführten elektrischen Leistung und den davon abhängigen Verlauf der Stickoxidkonzentration im Abgas.
- Fig. 10: zeigt schematisch ein Ausführungsbeispiel mehrerer zu einer Einheit zusammengefasster Applikatoren in der Frontalansicht.
- Fig. 11: zeigt schematisch ein Ausführungsbeispiel mehrerer zu einer Einheit zusammengefasster Applikatoren in der seitlichen geschnittenen Ansicht.
- Fig. 12: zeigt zur Erläuterung der Funktionsweise eine Wechselspannungsquelle für die Speisung des Applikators.

### BESCHREIBUNG BEVORZUGTER AUSFÜHRUNGSFORMEN

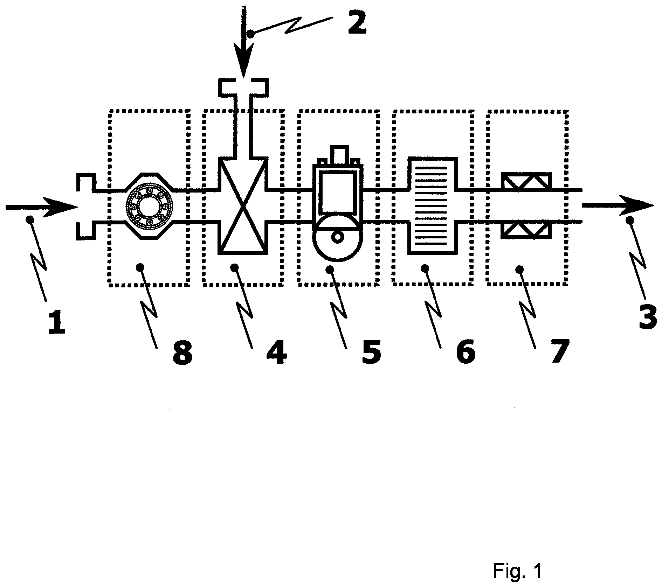

Die Fig. 1 zeigt die Positionierung des Applikators im Zuluftkanal einer Verbrennungsmaschine und verdeutlicht die unproblematische Integration der Erfindung in bereits bestehende Systeme, wie sie beispielsweise einem Kraftfahrzeug mit Benzin betriebenem Ottomotor entsprechen.

Die für die Verbrennung benötigte Luft 1 wird entweder direkt, über ein einfaches Schutzgitter gegen Insekten oder über einen Luftpartikelfilter dem Applikator 8 zugeführt. Dieser benötigt für seinen Betrieb lediglich eine von der Wechselspannungsquelle 13 gelieferte Wechselspannung - sonst nichts.

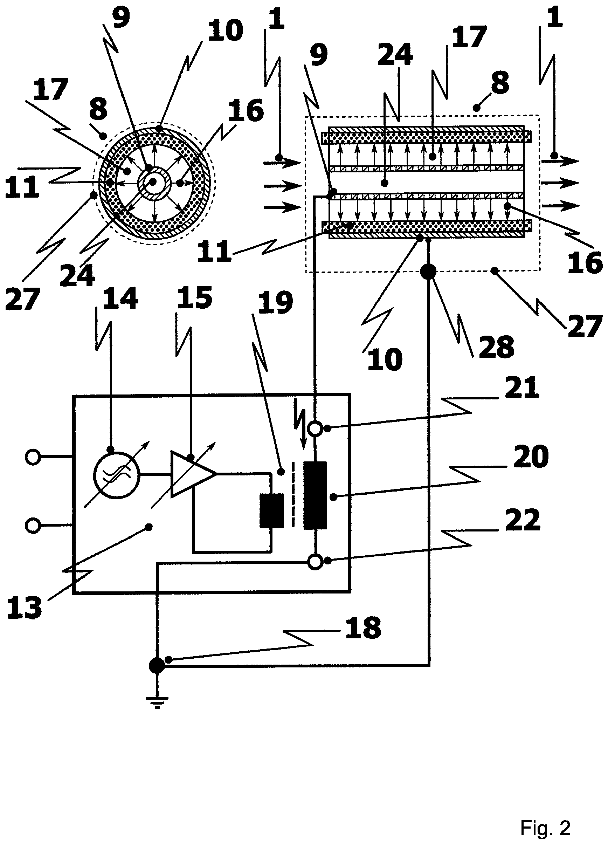

Es werden weder Zusatzstoffe, Abgasrückführungssysteme, Katalysatoren, Zentrifugen oder irgendwelche Ventile oder Drosselklappen benötigt. Es ist lediglich ein einziger hochspannungsfester isolierter Draht zwischen der Wechselspannungsquelle und dem Applikator notwendig, wenn dessen metallenes Gehäuse mit der Massefläche des Kraftfahrzeuges elektrisch leitend verbunden ist, um den Applikator bestimmungsgemäß zu betreiben. Die elektrische Rückleitung erfolgt dann über den bei Kraftfahrzeugen allgegenwärtigen Massepotentialanschluss 18 des metallenen Chassis, wie dies in Figur 2 gezeigt ist.

Um eventuelle Funkstörungen zu vermeiden, sollte dieser hochspannungsfester isolierter Draht mit einer Abschirmung versehen sein und diese Abschirmung sollte ebenfalls mit dem Massepotentialanschluss 18 verbunden sein.

Der Applikator befindet sich somit im Zuluftkanal vor einer eventuellen Vorrichtung 4 zur Mischung der Luft mit der zu verbrennenden Substanz 2, was beispielsweise einem Vergaser oder einer Einspritzanlage entsprechen würde, und somit insbesondere im verfahrenstechnischen Ablauf vor der Vorrichtung 5, in der ein Verbrennungsvorgang stattfindet, was beispielsweise dem Verbrennungsmotor entsprechen würde. Im Abluftkanal befindet sich das nach dem Verbrennungsprozess anfallende Abgas 3 mit den jeweiligen Schadstoffen. Diese werden wie bisher ohne weitere Eingriffe in bekannter Weise durch diverse Abgasfilter 6 und weitere in der Auspuffanlage 7 integrierten Geräte oder Maßnahmen nachträglich gereinigt.

Eines der Ziele dieser Erfindung ist es, die Konzentration dieser Schadstoffe im Abgas 3 durch eine Erhöhung der Reaktivität der für den Verbrennungsprozess benötigten Luft 1 signifikant zu verringern, um die jeweils verbauten Abgasfilter zu entlasten. Dies geschieht durch einen mit elektrischer Energie betriebenen Applikator 8, welcher durch eine Wechselspannungsquelle 13 gespeist wird, wie es in der Figur 2 schematisch dargestellt ist.

Die Figur 2 zeigt schematisch die elektrische Schaltung der Wechselspannungsquelle 13 mit dem damit verbundenen Applikator 8. Der Applikator 8 ist zur Veranschaulichung einmal in isolierter Darstellung in einer schematischen axialen Querschnittszeichnung und ein anderes Mal, elektrisch mit der Wechselspannungsquelle 13 verschaltet, in einer schematischen axialen Längsdarstellung wiedergegeben.

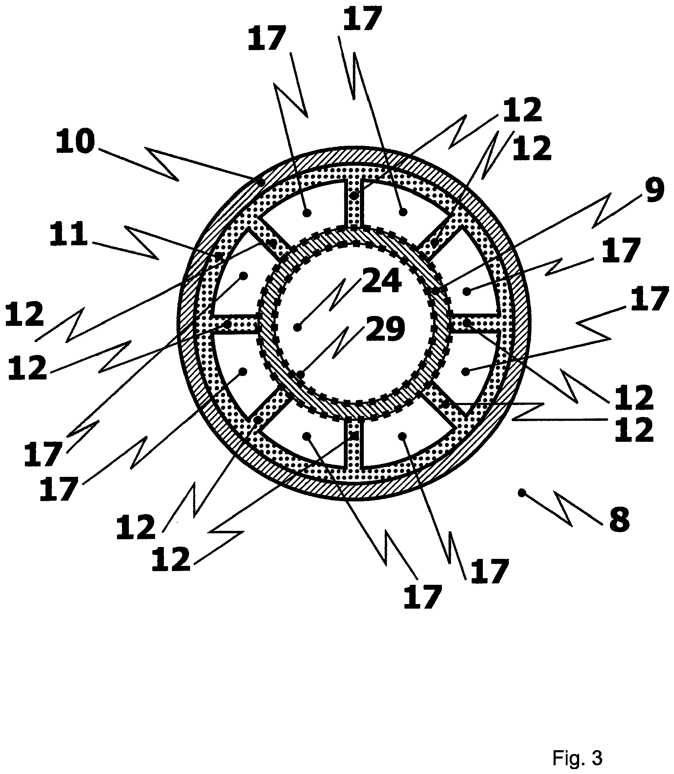

In der schematischen axialen Querschnittsdarstellung sind die jeweiligen Halterungen 12 zur Fixierung der Elektroden und des Abstandes der Elektroden zur Verbesserung der Übersichtlichkeit der Zeichnungen nicht eingezeichnet, obwohl sie für den bestimmungsgemäßen Betrieb des Applikators 8 außerordentlich wichtig sind. Die verschiedenen beispielhaften Ausführungsformen werden in den Figuren 3 4, 5 und 6 noch detailliert dargestellt.

In der Figur 2 zeigt die schematische axialen Querschnittsdarstellung des Applikators 8 die axiale Innenelektrode 9, in Form eines metallisch leitenden perforierten Hohlzylinders, welche zusammen mit der konzentrisch montierten, ebenfalls hohlzylinderförmigen aber nicht perforierten, Außenelektrode 10 geometrisch und elektrisch einen an beiden Stirnseiten offenen Zylinderkondensator bildet, in welchem sich bei einer Speisung durch die Wechselspannungsquelle 13 ein elektrisches Feld 16 im Feldraum 17 zwischen beiden Elektroden einstellt. Ein zusätzlicher, konzentrisch montierter dielektrischer Isolator 11 befindet sich einerseits mit einem maximal möglichen, von der Schichtdicke des dielektrischer Isolator 11 abhängigem, Abstand zwischen der Innenelektrode 9 und andererseits ohne Abstand unmittelbar auf der Außenelektrode 10. Dadurch wird eine Wechselspannungs-Gasentladung im Feldraum 17 ermöglicht, die unter der Bezeichnung "stille elektrische Entladung" oder "dielektrische Barriere Entladung" oder auch "Plasmaentladung" bekannt ist.

Durch den dielektrischen Isolator 11 sind beide Elektroden auch bei Ausbildung von Lichtbögen oder ähnlichen Erscheinungen stets galvanisch voneinander getrennt. Es fließt jedoch aufgrund der von der Wechselspannungsquelle 13 gelieferten elektrischen Energie ein signifikanter Verschiebungsstrom im Feldraum 17. Der Ort für die Anbringung des dielektrischen Isolators 11, welches hier als ein zylindrisches Rohr, welches geometrisch hinreichend länger ist, als die Innenelektrode 9, um einen elektrischen Überschlag an den Stirnseiten über den Stirnseitenrand hinaus zu verhindern, muss sich grundsätzlich innerhalb des Feldraumes befinden, wobei der genaue radial geometrische Ort je nach den Erfordernissen bei weiteren Ausführungsbeispielen auch noch anders zweckmäßig gewählt werden kann. So kann der dielektrische Isolator 11 als ein Rohr mit einem so geringen Durchmesser, dass er unmittelbar an der Innenelektrode 9 anliegt, ausgeführt sein. Auch eine Ausführung mit einem größeren Durchmesser, so dass der dielektrische Isolator etwa in der Mitte des Feldraumes positioniert ist, wäre denkbar. In der axialen Querschnittdarstellung des Applikators 8 in der Figur 2 ist der Durchmesser jedoch so groß gewählt, dass der dielektrische Isolator unmittelbar auf der Außenelektrode 10 aufliegt und mit dieser in radialer Richtung bündig abschließt, weil an dieser Stelle, d. h. im Bereich der Außenelektrode 10 das elektrische Feld 16 im Feldraum 17 zwischen den Elektroden minimal ist. An dieser Stelle kann also die physikalische Schichtdicke des dielektrischen Isolators 11 bei gleicher Durchschlagsfestigkeit signifikant dünner sein, als wenn sie unmittelbar an der Innenelektrode 9, wo der Betrag der Feldstärke des elektrischen Feldes 16 maximal ist, montiert worden wäre.

Weiterhin ist in der schematischen axialen Querschnittdarstellung des Applikators 8 in der Figur 2 zu erkennen, dass die perforierte Innenelektrode 9 ebenfalls rohrförmig ausgeführt ist und dass sie somit in ihrem Inneren einen feldfreien Innenraum 24 besitzt. Die den Applikator 8 in Richtung der Zylinderachse des Applikators 8 durchströmende Luft 1 wird somit zu einem Anteil direkt durch das Innere der Innenelektrode 9 und somit durch einen feldfreien Volumenbereich, nämlich den Innenraum 24, und zu einem anderen Teil durch den Feldraum 17 zwischen der perforierten Innenelektrode 9 und der massiven Außenelektrode 10 geführt, wo sie eine Wechselwirkung mit der von der Wechselspannungsquelle 13 gelieferten elektrischen Energie erfährt.

Durch diese Aufteilung in einen feldfreien Volumenbereich 24 und einen Volumenbereich für den Feldraum 17 kann der für die Erzeugung des Plasmas erforderliche Betrag der Hochspannung begrenzt werden, da die geometrischen Abstände der Elektroden im Feldraum 17 geringer sind und dadurch der Betrag der elektrischen Feldstärke bei einer entsprechenden vorgegebenen Größe der an den Elektroden angelegten Spannung signifikant höher ist.

Zwar wäre es grundsätzlich auch möglich, durch die Verwendung einer dünnen massiven oder drahtförmigen Innenelektrode und einer Außenelektrode mit geringerem Durchmesser ebenfalls geringe Abstände und somit eine hohe Feldstärke mit einer entsprechenden Spannung zu erzeugen - jedoch wenn der Querschnitt von der Stirnseite eines solchermaßen konstruierten Applikators betrachtet wird, so würde sich eine signifikant geringere mit einem elektrischen Feld behaftete Querschnittsfläche ergeben, wodurch das gesamte mit einem elektrischen Feld behaftete Volumen eines solchen Applikators viel zu gering wäre, um eine hinreichend große Menge an aktivierter Luft zu erzeugen.

Durch die Perforierung der Innenelektrode 9 wird die zunächst laminar einströmende Luft 1 von dem Mantel der Innenelektrode 9 aus im weiteren Verlauf zunehmend verwirbelt. Es finden an den Löchern des Hohlzylinders durch die nicht gleichförmige und nicht geschlossene Wandung nämlich Verwirbelungen statt, wodurch die Luft in den jeweiligen Volumenbereichen im Verlauf der Durchströmung durch den Applikator 8 zunehmend vermischt wird. Dadurch werden Drosselklappen und Ventile überflüssig. Wird vom Motor beispielsweise für eine höhere Last ein größerer Luftdurchsatz angefordert, dann nimmt die Strömungsgeschwindigkeit der Luft 1 insbesondere im feldfreien Volumenbereich 24 zu, es kommt dadurch zu einer stärkeren Verwirbelung mit der aktivierten Luft im Feldraum 17 und somit automatisch zu einer stärkeren Durchmischung der Luft aus den jeweiligen Volumina.

Durch den rohrförmigen Aufbau der Innenelektroden 9 und Außenelektrode 10 und des dielektrischen Isolators 11 verhält sich der Applikator 8 in elektrischer Hinsicht wie ein Zylinderkondensator.

An dieser Stelle sei daraufhingewiesen, dass sich die Kapazität dieses so gebildeten Zylinderkondensators in Abhängigkeit von der Luftfeuchtigkeit der für den Verbrennungsprozess benötigten Luft 1 ändert, da Wasser eine hohe relative Permittivität von etwa 80 besitzt. Somit sind die elektrischen Verhältnisse im Applikator 8 signifikant von der jeweiligen Wetterlage abhängig. Bei trockener Luft an einem sonnigen Wintertag ist der Kapazitätswert somit niedriger als bei Nebel oder bei einem Regenschauer. Dies muss berücksichtigt werden, wenn der Applikator 8 in seinem optimalen Betriebspunkt stets in Resonanz betrieben werden soll, weil dann seine jeweilige Kapazität zusammen mit der Hochspannungswicklung 20 in der Wechselspannungsquelle 13 einen auf die Frequenz der Wechselspannung abgestimmten Parallelresonanzkreis bilden.

Auch in der schematischen axialen Längsdarstellung des Applikators 8 in der Figur 2 sind die Halterung 12 zur Fixierung der Elektroden und des Abstandes der Elektroden zur Verbesserung der Übersichtlichkeit nicht eingezeichnet. Letztere werden, wie bereits erwähnt, in den Figuren 3 bis 6 detaillierter dargestellt.

In der Darstellung gemäß Figur 2 ist deutlich zu erkennen, wie die Luft 1 an der einen Stirnseite des vom Applikator 8 gebildeten Zylinderkondensators einströmt, dabei sowohl den feldfreien Volumenbereich 24 innerhalb der Innenelektrode 9, nachfolgend als unbeeinflusste Luft bezeichnet, als auch den Feldbereich 17 zwischen der Innenelektrode 9 und der Außenelektrode 10, in dem das elektrische Feld 16 vorhanden ist, nachfolgend als aktivierte Luft bezeichnet, passiert und an der anderen Stirnseite des vom Applikator 8 gebildeten Zylinderkondensators wieder ausströmt. Dieses ausströmende Gemisch von unbeeinflusster Luft und von aktivierter Luft wird dann im Zuluftkanal gemäß Figur 1 dem weiteren Verbrennungsablauf zugeführt.

In der schematischen axialen Längsdarstellung ist zu erkennen, dass die in Richtung der Zylinderachse ausgedehnte geometrische Länge des rohrförmigen dielektrischen Isolators 11 soweit vergrößert ist, dass sich kein Lichtbogen oder Funkenstrecke durch das Streufeld an den Stirnkanten des vom Applikator 8 gebildeten Zylinderkondensators bilden kann. So wird eine stille Entladung erzwungen, die ausschließlich im Feldraum 17 stattfindet, weil dem elektrischen Feld 16 ein eventueller Überschlag an den Stirnkanten durch diese Maßnahme verwehrt wird.

Sowohl in der axialen Querschnittsdarstellung als auch in der axialen Längsdarstellung der Figur 2 ist schematisch ein zusätzliches feinmaschiges metallisches Netz 27 skizziert, welches den Applikator 8 vollkommen umschließt. Dieses feinmaschige metallische Netz 27 ist über die Verbindungsstelle 28 mit dem Massepotentialanschluss 18 der Wechselspannungsquelle 13 elektrisch leitend verbunden. Das feinmaschige metallische Netz 27 hat eine Maschenweite von maximal einem Millimeter und wirkt als Faraday-Käfig. Dadurch werden eventuelle Störungen im Rundfunkbereich unterdrückt, die möglicherweise durch den Betrieb des Applikators 8 hervorgerufen werden könnten. Dieses feinmaschige metallische Netz 27 muss insbesondere an den Stirnseiten des vom Applikator 8 gebildeten Zylinderkondensators abschirmend wirken und gleichzeitig so montiert sein, dass jeweils ein ausreichender Abstand zur Innenelektrode 9 besteht, damit sich keine direkte Funkenstrecke aufgrund des Potentialunterschiedes ausbilden kann, die das elektrische Feld 16 kurzschließen würde. Da die Ausgestaltung von der jeweiligen Geometrie der entsprechenden Aggregate abhängt, ist das feinmaschige metallische Netz 27 in der Figur 2 nur schematisch angedeutet. Insbesondere kann das feinmaschige metallische Netz 27 auch direkt im Bereich der jeweiligen Stirnseiten des Applikators 8 ringförmig umlaufend direkt mit der Außenelektrode 8 kontaktiert sein. Dadurch ist ebenfalls eine Unterdrückung der elektromagnetischen Störfelder gegeben. Ein zusätzlicher Effekt zur Erhöhung der Betriebssicherheit ist dadurch gegeben, dass durch das stirnseitig angebrachte und geerdete feinmaschige metallische Netz 27 zwar die Luft 1 ungehindert durchströmen kann, jedoch ein Funkendurchschlag unmöglich wird. Somit sind ungewollte Zündungen im Bereich der Vorrichtung 4 zur Mischung der Luft 1 mit der zu verbrennenden Substanz 2 ausgeschlossen. Auch ein je nach den Umständen des praktischen Betriebes der Verbrennungsmaschinenanordnung denkbares, eventuelles ungewolltes Eindringen eines Gemisches aus der Luft 1 mit der zu verbrennenden Substanz 2 in den zunächst noch nicht betriebenen Applikator 8, der dann dieses zündfähige Gemisch beim Einschalten womöglich in Brand setzen könnte, bliebe ohne negative Folgen, weil die Flammen das feinmaschige Netz nicht durchdringen können. Dieser Effekt ist schon seit langem bekannt und wurde im Bereich des Bergbaus im Zusammenhang mit den Sicherheitsgrubenlampen sowohl bei der Davy-Lampe mit Flammsieb als auch bei der Clanny-Lampe mit Glaszylinder ausgenutzt.

Zusätzlich verhindert das feinmaschige metallische Netz 27 das Eindringen größerer Fremdkörper wie Mücken, Fliegen oder andere Fluginsekten, die womöglich den Betrieb des Applikators 8 im Laufe der Zeit negativ beeinflussen könnten. Somit kann der Applikator 8 auch problemlos vor dem eigentlichen Luftfilter eines Kraftfahrzeugs montiert werden, da kleiner Fremdkörper den Applikator 8 problemlos durchwandern können.

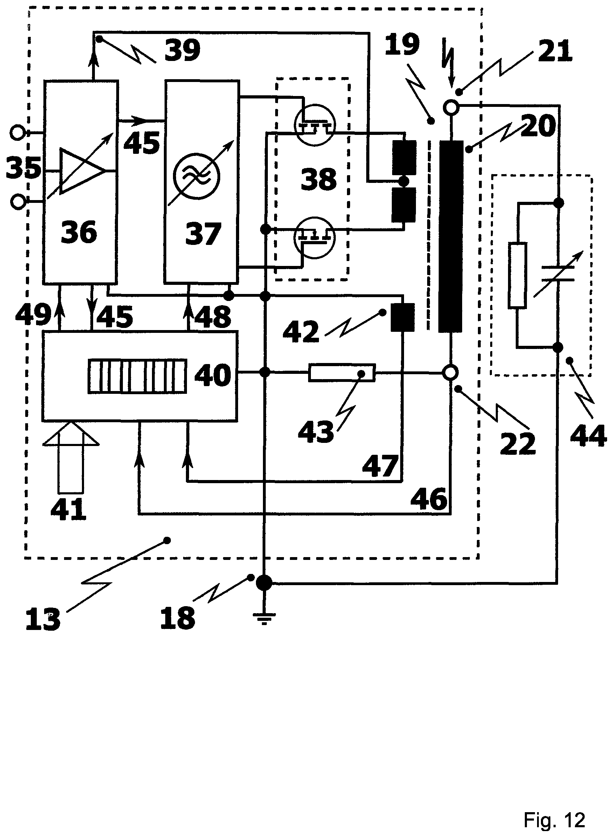

Die in der Figur 2 dargestellte Wechselspannungsquelle 13 speist den Applikator 8 mit elektrischer Energie. Sie bezieht ihre eigene Betriebsenergie aus dem Bordnetz der Verbrennungsmaschine. Bei einem typischen Kraftfahrzeug würde die zur Verfügung stehende Betriebsspannung somit bei etwa 12 Volt Gleichspannung liegen. Diese Spannung wäre für den Betrieb des Applikators 8 zu gering. Der als Prototyp für die nachfolgend dokumentierten Messergebnisse verwendete Applikator wird bei einer Wechselspannung von etwa 50 Kilovolt bei einer Frequenz der Wechselspannung von etwa 11 Kilohertz betrieben. Diese Wechselspannung wird durch einen elektronischen Wechselrichter beispielsweise mit Hilfe von zwei im Gegentakt betriebenen Leistungstransistoren erzeugt, wobei die so erzeugten wechselgerichteten Stromimpulse dann mit Hilfe des Transformators 19 auf den gewünschten hohen Spannungswert transformiert werden. Dazu besitzt der Transformator 19 eine Hochspannungswicklung 20. Diese ist mit ihrem Hochspannungsanschluss 21 mit der Innenelektrode 9 des Applikators 8 elektrisch leitend verbunden. Für diese Verbindung muss ein hochspannungsfestes und gut isoliertes Kabel verwendet werden. Der Erdungsanschluss 22 der Hochspannungswicklung 20 ist elektrisch leitend mit dem Massepotentialanschluss 18 der Wechselspannungsquelle 13 verbunden. Dazu genügt ein einfacher Draht, der nicht zwingend isoliert sein muss. Die Induktivität der Hochspannungswicklung 20 des Transformators 19 wirkt zusammen mit der Kapazität des vom Applikator 8 gebildeten Zylinderkondensators wie ein Parallelresonanzkreis. Es ist auch möglich, die Anordnung als kapazitiv belastete Teslaspulenanordnung zu deuten. Der physikalische Effekt ist ergibt sich folgendermaßen: Im Resonanzfall steigt die Spannung an den Elektroden wegen der theoretisch unendlich hohen Impedanz des abgestimmten Resonanzkreises zunächst auf sehr hohe Werte an, weil der frequenzabhängige Verlauf der Impedanz des unbelasteten Resonanzkreises bei der Resonanzfrequenz eine Singularität besitzt, die als sogenannten Resonanzkatastrophe bekannt ist. Dadurch kommt es zu einem sehr hohen Betrag der Feldstärke des elektrischen Feldes 16 im Feldraum 17 des Applikators 8. Dadurch werden die stabilen Verbindungen der Moleküle der Luft 1 gewaltsam separiert und es entsteht ein elektrisch leitfähiges Plasma der Luft als vierter Aggregatzustand, also ein Gemisch auf molekularer oder atomarer Ebene, welches Ionen und Elektronen als freie Ladungsträger enthält. Es bilden sich lokale Filamente die den Feldraum durchsetzen und durch die ein quasi-galvanischer Stromfluss stattfindet, der an der Oberfläche des dielektrischen Isolators 11 dann in einen sogenannten nichtgalvanischen Verschiebungsstrom übergeht, wodurch der Wechselspannungsstromkreis geschlossen wird. Durch diesen so stattfindenden Stromfluss wird die, durch die Hochspannungswicklung 20 und den Applikator 8 gebildete, Resonator-Anordnung bedämpft. Es wird zur Erzeugung des Plasmas elektrische Wirkleistung im Applikator 8 verwendet. Dadurch findet die sogenannte Resonanzkatastrophe nicht statt, sondern es verbleibt die Spannung zwischen der Innenelektrode 9 und der Außenelektrode 10 auf konstruktiv beherrschbare Werte. Der elektrische Stromfluss zur kontinuierlichen Aufrechterhaltung des Plasmas im Applikator 8 wirkt, in elektrischer Hinsicht, ähnlich wie ein Widerstand, der Wirkleistung für seinen bestimmungsgemäßen Betrieb benötigt. Diese Wirkleistung wird von der Wechselspannungsquelle 13 geliefert. Diese besitzt eine Vorrichtung 15 zur Einstellung der dem Applikator 8 zugeführten elektrischen Leistung 34. Dabei handelt es sich im einfachsten Fall um eine von einem Potentiometer gesteuerte Stromquelle zur Speisung der Endstufentransistoren im Umrichter. Eine solche Vorrichtung ist für grundsätzliche Messungen im Laborbetrieb geeignet. Eine von einem Mikrocontroller gesteuerte Vorrichtung zur Einstellung der dem Applikator 8 von der Wechselspannungsquelle 13 zugeführten bzw. in den Applikator injizierten elektrischen Leistung 34 ist beispielsweise in einem Kraftfahrzeug mit Verbrennungskraftmaschine sinnvoll, wobei durch eine Sonde im Abluftkanal das Abgas 3 hinsichtlich beispielsweise seiner Stickoxidkonzentrationswerte analysiert wird und die je nach zuvor abgespeicherten bzw. manuell oder elektronisch einstellbaren Vorgaben eines Sollwertes dann die in den Applikator injizierten elektrischen Leistung 34 entsprechend eingestellt wird. Ergibt die Auswertung des Signals der sich im Abluftkanal befindlichen Stickoxidsonde, dass die jeweiligen Stickoxidkonzentrationswerte im Abgas 3 über den vorgegebenen Sollwerten liegen, so bewirkt beispielsweise ein in der Wechselspannungsquelle dann noch zu integrierender Mikrokontroller in der Funktion eines zentralen Steuerbausteins, als Reaktion darauf, mit Hilfe der Vorrichtung 15 zur Einstellung der dem Applikator 8 zugeführten elektrischen Leistung 34, eine Erhöhung der von der Wechselspannungsquelle 13 in den Applikator injizierten elektrischen Leistung 34. Dadurch sinkt die Stickoxidkonzentration im Abgas 3. Dies erfolgt so lange, bis die Stickoxidkonzentrationswerte im Abgas 3 wieder unterhalb eines vorgegebenen Sollwertes liegen. Eine solchermaßen in bekannter Weise zweckmäßig entworfene Regelungsvorrichtung ergibt ein sehr wichtiges Anwendungsbeispiel für die Einsatzmöglichkeiten dieser Erfindung. Eine detailliertere Beschreibung dazu findet sich im Zusammenhang mit den Erläuterungen zu Figur 12.

Zusätzlich zur Vorrichtung 15 zur Einstellung der dem Applikator 8 zugeführten elektrischen Leistung 34 besitzt die Wechselspannungsquelle 13 eine Vorrichtung 14 zum Einstellen einer variablen Betriebsfrequenz. Im einfachsten Anwendungsfall für Messungen im Laborbetrieb ist dies ein manuell zu betätigender Signalgenerator mit variabler Frequenz, der zur Ansteuerung der Endstufentransistoren des in der Wechselspannungsquelle 13 befindlichen elektronischen Umrichters verwendet wird. Im Labor ist mit Hilfe hochspannungsfester Vorwiderstände eine Messung der Spannung am Hochspannungsanschluss 21 der Hochspannungswicklung 20 leicht möglich. Dann kann die Frequenz der von der Wechselspannungsquelle 13 an den Applikator gelieferten Wechselspannung stets solange variiert werden, bis der Betrag des Spannungswertes maximal ist. Alternativ wäre auch die Überwachung des Spannungsabfalls an einem Messwiderstand möglich, der anstelle einer einfachen Drahtverbindung, wie sie in Figur 2 gezeigt ist, zwischen dem Erdungsanschluss 22 und dem Massepotentialanschluss 18 geschaltet wird. Die durch diesen Messwiderstand fließende Stromstärke ist ebenfalls ein Maß für die von der Wechselspannungsquelle in den Applikator 8 inj i-zierte elektrische Energie 34, welche im Resonanzfall maximal wird. Der Vorteil der geschilderten indirekten Strommessung ist die Vermeidung kostspieligerer und hochspannungsfester Vorwiderstände. Steigt der Spannungsabfall über den Messwiderstand auf ein Maximum, dann befindet die von der Kapazität des Applikators 8 und der Induktivität der Hochspannungswicklung 20 gebildete Parallelresonanzkreisanordnung in Resonanz und der Applikator 8 arbeitet dann optimal. Eine Verstimmung des Resonanzkreises im Betrieb kann mehrere Ursachen haben. Eine Erhöhung der relativen Luftfeuchtigkeit der den Applikator 8 durchströmenden Luft 1, beispielsweise bei Regenwetter, bewirkt eine Erhöhung des Kapazitätswertes des vom Applikator 8 gebildeten Zylinderkondensators, weil Wasser eine relative Permittivität von etwa 80 und trockene Luft 1 lediglich eine relative Permittivität von 1 besitzt, was dann in Folge des erhöhten Kapazitätswertes wiederum eine Verringerung der Resonanzfrequenz bewirkt. Eine andere Schwankung des Kapazitätswertes des Applikators 8 hat ihre Ursache im bestimmungsgemäßen Betrieb des Applikators 8. Die relative Permittivität von Plasma kann Werte besitzen, die kleiner als 1 sind. Weil aber gerade der Feldraum 17 im Applikator 8 im bestimmungsgemäßen Betrieb reichlich mit Plasmafilamenten durchsetzt ist, kann sich im Betrieb der Kapazitätswert des von den Elektroden des Applikators 8 gebildeten Zylinderkondensators verringern. Dies bewirkt dann eine Erhöhung der Resonanzfrequenz.

Es ist für einen stabilen und an die wetterbedingte unterschiedliche Beschaffenheit der Luft 1 angepassten bestimmungsgemäßen Betrieb der erfindungsgemäßen Vorrichtung sehr zweckmäßig, die jeweilige Frequenz der von der Wechselspannungsquelle 13 gelieferten Wechselspannung so anzupassen, dass sich die Vorrichtung für den optimalen Betriebszustand stets in Resonanz befindet. Dazu dient die Vorrichtung 14 zur Einstellung der variablen Betriebsfrequenz der Wechselspannungsquelle 13, welche ebenfalls in bekannter Weise mit Hilfe eines programmierbaren Mikrokontrollerbausteins gesteuert werden kann.

Wird der Applikator 8 bei seiner Resonanzfrequenz betrieben, so stellt sich ein stabiler kontinuierlicher Plasmastrom zwischen der Innenelektrode 9 und der Außenelektrode 10, bzw. etwas davor, nämlich in dem durch den dielektrischen Isolator 11 etwas verringerten Feldraum 17 ein.

Ein virtuelles Gedankenexperiment erläutert anschaulich näherungsweise das Phänomen. Würde die Plasmabildung im Feldraum durch äußere Umstände in irgendeiner Weise gestört, wodurch die temporäre Anzahl der lokalen Plasmafilamente zurückgehen würde, dann würde die Stromstärke mit der verringerten Anzahl der Plasmafilamente insgesamt ebenfalls geringer werden. Dadurch würde der Resonanzkreis entlastet werden, d. h. der dem Resonanzkreis in einem virtuellen Ersatzschaltbild parallel geschaltete Widerstand würde quasi einen höheren Wert annehmen und somit weniger Wirkleistung umwandeln.

Dadurch würde jedoch die Spannung im Parallelresonanzkreis wieder signifikant ansteigen, wodurch der Betrag der Feldstärke des elektrischen Feldes 16 im Feldraum 17 des Applikators 8 ebenfalls signifikant ansteigen würde, wodurch wiederum der aktuelle Ionisationsgrad des Plasmas erhöht würde, da der Anteil der Erzeugung weiterer Ionen durch Stoßionisation zunimmt, wenn die betreffenden Teilchen durch die höhere Feldstärke jeweils stärker beschleunigt werden und somit eine höhere kinetische Energie besitzen, die zum Aufbrechen bestehender stabiler molekularer Verbindungen durch Stoßionisation im Feldraum 17 führt.

Ein weiterer Grund, den Applikator stets bei seiner Resonanzfrequenz zu betreiben liegt darin, dass der vom Applikator 8 und der Hochspannungswicklung 20 gebildete Resonanzkreis wie der Tankkreis einer Sendeendstufe wirkt und dadurch, bei Abstimmung auf seine Resonanzfrequenz, die von der Wechselspannungsquelle 13 eventuell durch den Wechselrichtungsvorgang parasitär erzeugten Oberwellen, die ein Vielfaches der Frequenz der Wechselspannung enthalten können und Störungen in nachrichtentechnischen Geräten verursachen, signifikant unterdrückt. In diesem Zusammenhang sei daraufhingewiesen, dass eine Unterdrückung von parasitär abgestrahlter elektromagnetischer Energie durch die von der Wechselspannungsquelle 13 an den Applikator 8 gelieferte Hochspannung mit bekannten Maßnahmen durchführbar ist. Dazu ist eine fachmännische Konstruktion der Zuführung der Kabelverbindung von dem Hochspannungsanschluss 21 der Hochspannungswicklung 20 zur Innenelektrode 9 des Applikators 8 erforderlich. Neben der bereits oben erwähnten Hochspannungsfestigkeit des Verbindungskabels sollte dieses zusätzlich über eine hinreichend gute metallische Schirmung verfügen, wie es bei hochspannungsfesten Koaxialkabeln der Fall ist, wie sie für Sendeanlagen verwendet werden. In Kombination mit dem oben beschriebenen feinmaschigen metallischen Netz 27, ist ein für benachbarte elektronische Geräte störungsfreier Betrieb möglich.

Für die konstruktive Realisierung des Applikators 8 gibt es zahlreiche Möglichkeiten. In den nachfolgenden Zeichnungen sind zwei Ausführungsbeispiele dargestellt. Eine detailliertere Beschreibung zur Steuerung der Frequenz und der in den Applikator injizierten elektrischen Leistung 34 findet sich im Zusammenhang mit den Erläuterungen zu Figur 12.

Die Figur 3 zeigt schematisch einen Querschnitt durch ein erstes Ausführungsbeispiel eines kreiszylinderförmigen Applikators 8, wie er auch für die Ermittlung der unten dargestellten Messergebnisse verwendet worden ist. Die Innenelektrode 9 besteht bei diesem Ausführungsbeispiel aus einem kreiszylindrisch geformten Metall, welches durchgehend perforiert ist. Für den Versuchsaufbau wird als Metall ein gebogenes Kupferblech mit einer Dicke von 1,0 mm verwendet. Die Perforation ist durch Stanzen quadratischer Öffnungen mit einer Kantenlänge von 2 mm erzeugt worden, wodurch der Mantel der Innenelektrode 9 eine rechteckförmige Perforierung 29 aufweist. Alternativ ist auch eine Perforierung mit beispielsweise runden Öffnungen denkbar. Dann wäre die Perforierung 29 in Form kreisrunder Löcher in das Kupferblech der Innenelektrode 9 gestanzt, was produktionstechnische Vorteile bringt, weil die laterale Drehung des Stanzwerkzeuges bei einem kreisrunden Querschnitt gleichgültig ist. Bei einem rechteckigen Querschnitt ergeben laterale Verdrehungen des Stanzwerkzeuges schief zueinander stehende Rechtecke mit seitlich ungleichen Abständen, wodurch die Metallstreifen zwischen den Öffnungen der Perforierung 29 möglicherweise durch Materialmangel instabil werden und sich die Abstände zwischen den Elektroden im Feldraum in unzulässiger Weise lokal verringern, was zu einem inhomogen verteilten elektrischen Feld 16 im Feldraum 17 des Applikators 8 und damit zu einer Reduktion der Anzahl der Plasmafilamente führen könnte. Es sind auch dreieckige oder sechseckige Perforierungen oder auch Perforierungen aller Arten und Größen möglich, die hier nicht weiter dargestellt werden können. Wichtig und vorteilhaft ist jedoch, dass die Perforierung nicht mit Hilfe eines Bohrers, sondern mit Hilfe eines Schlagwerkzeuges stets von der gleichen Seite ausgehend durchgeführt wird. Dabei bilden sich auf der Gegenseite des Bleches an den Außenkanten leichte, scharfkantige Ausbuchtungen. Diese dürfen nicht durch abkanten beseitig werden, weil diese scharfen Kanten zur Einleitung der Erzeugung von Plasmafilamenten durch lokale Überhöhung des elektrischen Feldes 16 dienen. Dazu wird das Metall der Innenelektrode 9 so über einen Kern zylinderförmig gebogen, dass die scharfen Kanten und leichten Ausbuchtungen der Perforierung 29 in den Feldraum hinein gerichtet sind. Die zum Aufbau der unten besprochenen Messergebnisse verwendete Innenelektrode 9 besteht aus einem perforierten Kupferblech, welches zu einem 10 cm langen Kreiszylinder mit einem Innendurchmesser von 33 mm und einem Außendurchmesser von 35 mm gebogen worden ist. Der sich geometrisch ergebende feldfreie Volumenbereich 24 beträgt bei dem hier verwendeten Prototypen somit gerundet 86 Kubikzentimeter. Als dielektrischer Isolator 11 wird für den Aufbau des Applikators 8 ein Silikonschlauch mit einer Stärke von 3 mm und einer Länge von insgesamt 14 cm verwendet. Dieser steht auf beiden Stirnseiten des Applikators um jeweils 2 cm vor, um einen elektrischen Überschlag zu unterbinden. Die Halterung 12 zur Fixierung der Elektroden und des Abstandes der Elektroden besteht aus dem gleichen Material. Die gleichmäßig im Feldraum 17 verteilten acht einzelnen Stege der Halterung 12 zur Fixierung der Elektroden und des Abstandes der Elektroden sind gemäß der Figur 3 in Form von Stegen zwischen dem dielektrischen Isolator 11 und der Innenelektrode 9 mit einer Höhe von jeweils 3 mm gepresst und unterteilt der Feldraum dadurch in acht gleichartige Kammern. Dadurch ergibt sich ein von der zu aktivierender Luft durchströmbarer Feldraum 17 mit einem Volumen von lediglich etwa 35 Kubikzentimetern. Dieser relativ geringe Feldraum 17 hat sich durch die Verwendung vorhandener Materialien für den Aufbau eines Prototyps für den Applikator 8 ergeben und in dieser Form bereits zu hinreichend signifikanten Messergebnissen geführt. Es liegt jedoch nahe, dass eine Vergrößerung des Feldraumes den Wirkungsgrad des Applikators 8 insgesamt deutlich erhöhen kann.

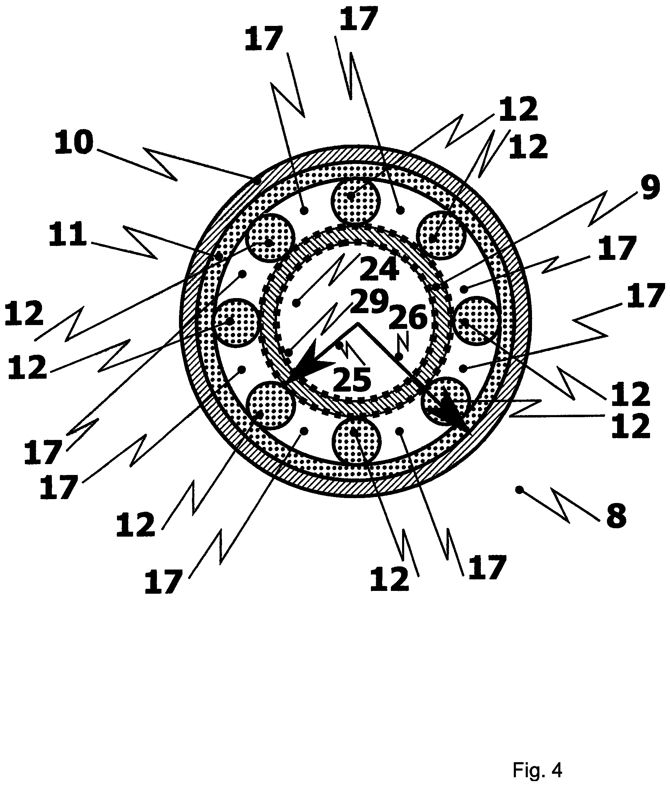

Eine erste diesbezügliche Verbesserung würde ein konstruktiv überarbeiteter Aufbau des Applikators 8 gemäß der in Figur 4 gezeigten Querschnittdarstellung erbringen. Anstelle des Silikons wird ein Rohr aus keramischem Material als dielektrischer Isolator 11 verwendet. Die Halterung 12 zur Fixierung der Elektroden und des Abstandes der Elektroden besteht ebenfalls aus Keramik und hat beispielsweise die Form kleiner Zylinder, die gemäß der Figur 4 gleichmäßig im Feldraum 17 verteilt sind. In der Figur 4 sind acht Halterungen 12 zur Fixierung der Elektroden und des Abstandes der Elektroden skizziert. Diese Anzahl ist jedoch nicht zwingend notwendig. Eine Reduzierung der Anzahl der zylinderförmigen Halterungen 12 zur Fixierung der Elektroden und des Abstandes der Elektroden auf lediglich drei Stück pro Applikator 8 würde ohne Einbuße der Stabilität den Materialaufwand verringern und gleichzeitig das von der Luft 1 durchströmbare Volumen im Feldraum vergrößern. Eine Erhöhung der Anzahl der Halterungen 12 zur Fixierung der Elektroden und des Abstandes zwischen den Elektroden hat hingegen den Vorteil, dass die jeweiligen Kriechstrecken der Filamente des Plasmas vergrößert werden, was zu einem höheren Maß an Wechselwirkungen führt.

Während die elektrischen Feldlinien auf einem metallischen Leiter bei den hier im Applikator 8 gegebenen elektrischen Verhältnissen stets senkrecht zur Oberfläche des Metalls entspringen oder münden, sieht das bei einer dielektrischen Grenzschicht völlig anders aus. Da die zur Grenzfläche tangentiale Komponente der vektoriellen elektrischen Feldstärke stetig ist, folgt je nach Ausführungsform der Halterungen 12 zur Fixierung der Elektroden und des Abstandes zwischen den Elektroden die elektrische Feldstärke der Kontur diese dielektrischen Materialien. Mit einer speziellen dafür geeigneten Kameravorrichtung lässt sich deutlich beobachten, dass ein sehr großer Teil der vom Plasma gebildeten Filamente entlang der von der Halterungen 12 zur Fixierung der Elektroden und des Abstandes zwischen den Elektroden jeweils gebildeten dielektrischen Oberflächen verläuft. Dabei sind die Filamente zwar hinsichtlich ihrer Schwerpunkte weitgehend ortsfest, nachdem sie generiert worden sind, jedoch finden heftige Schwankungen um den Schwerpunkt mit möglicherweise sogar Anregung von Phononen auch im akustisch wahrnehmbaren Bereich statt. Wird die von der Wechselspannungsquelle in den Applikator 8 injizierte Leistung 34 erhöht, so verbreitern sich mit zunehmender Leistung die jeweiligen Filamente, die Schwankungen vergrößern ihre Amplitude und die Leuchterscheinungen nehmen an Intensität zu.

Weitere Ausführungsformen der Halterungen 12 zur Fixierung der Elektroden und des Abstandes zwischen den Elektroden sind somit zweckmäßig, um die Wechselwirkung der Filamente des Plasmas mit der Luft 1 zu intensivieren.

Während die Figur 4 einen Querschnitt durch ein zweites Ausführungsbeispiel eines Applikators mit kreiszylinderförmigen Halterungen 12 zur Fixierung der Elektroden und des Abstandes zwischen den Elektroden zeigt, die jeweils eine glatte Oberfläche besitzen, werden in den nachfolgenden Bildern mögliche Ausführungsbeispiele mit signifikant vergrößerter Oberfläche der dielektrischen Grenzschicht vorgestellt.

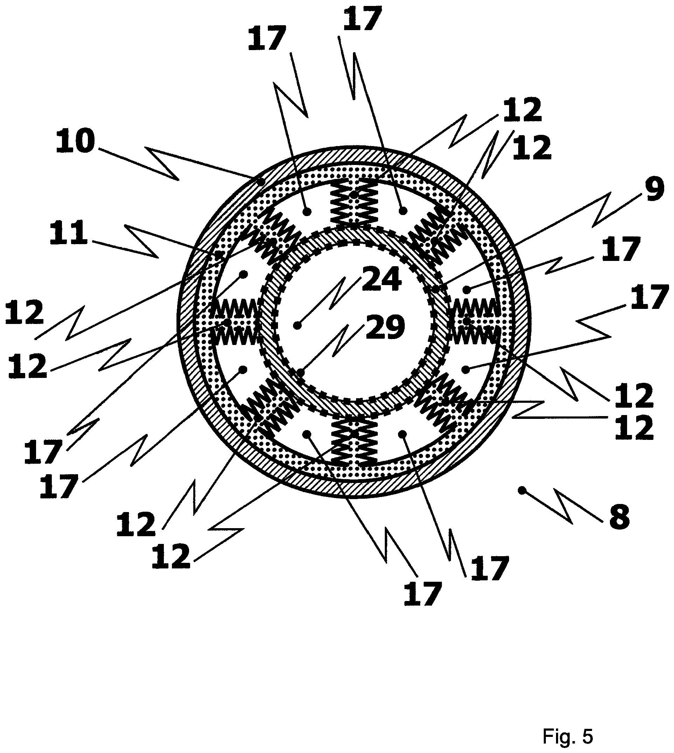

Die Figur 5 zeigt einen Querschnitt durch ein drittes Ausführungsbeispiel eines Applikators, mit Halterungen 12 zur Fixierung der Elektroden und des Abstandes zwischen den Elektroden, deren Oberflächen signifikant durch zweckmäßige Formgebung vergrößert worden sind. Die sich bei dieser Anordnung ergebenden Filamente haben jeweils eine deutlich größere Wirkfläche, weil sie der erheblich verlängerten zickzackförmigen lateralen Kontur der dielektrischen Grenzschicht folgen muss.

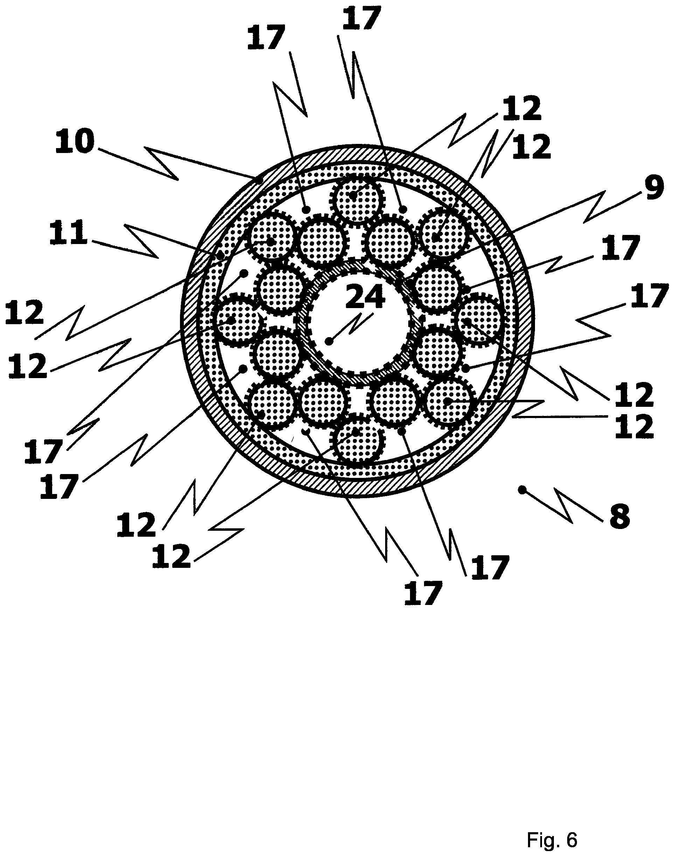

Die Figur 6 zeigt einen Querschnitt durch ein viertes beispielhaftes Ausführungsbeispiel eines Applikators. Hierbei bestehen die Halterungen 12 zur Fixierung der Elektroden und des Abstandes zwischen den Elektroden aus einer Vielzahl miteinander verschachtelter Kreiszylinder aus dielektrischem Material, deren Mantelflächen jeweils noch zusätzlich angeraut oder mit einer geeigneten, die Oberflächen vergrößernden, Struktur behaftet sind.

An dieser Stelle sei deutlich daraufhingewiesen, dass die Halterungen 12 zur Fixierung der Elektroden und des Abstandes zwischen den Elektroden vorzugsweise jeweils über die gesamte Länge des Feldraumes 17 ausgedehnt sind. Dies gilt für alle Ausführungsbeispiele der Applikatoren, unabhängig von der jeweiligen Form. Diese Halterungen 12 zur Fixierung der Elektroden und des Abstandes zwischen den Elektroden dienen nämlich nicht nur der mechanischen Fixierung, sondern verursachen durch ihre materialabhängige Permittivität eine Inhomogenität im Feldraum und bewirken dadurch eine besonders intensive Generierung von Plasma-Filamenten. Eine Verkürzung der jeweiligen Längen dieser Halterungen 12 zur Fixierung der Elektroden und des Abstandes zwischen den Elektroden ist zwar prinzipiell möglich, führt jedoch bei gleichen elektrischen Verhältnissen zu einer Verringerung der Menge der gebildeten Plasma-Filamente. Sollte aus irgendwelchen konstruktiven Gründen indes doch eine spaltweise Unterbrechung der Gesamtlänge der Halterungen 12 zur Fixierung der Elektroden und des Abstandes zwischen den Elektroden notwendig sein, um beispielsweise thermische Verspannungen zu unterdrücken, dann sollte die Spaltweite etwa gleich weit sein, wie die Breite der jeweiligen Halterungen 12 zur Fixierung der Elektroden und des Abstandes zwischen den Elektroden, damit an den Stirnseiten der Spalte sich ebenfalls ersatzweise eine gleichgroße Anzahl von Plasma-Filamenten bilden kann.

Die Verwendung keramischer Materialien für die Realisierung sowohl des dielektrischen Isolators 11 als auch für die Halterungen 12 zur Fixierung der Elektroden und des Abstandes zwischen den Elektroden hat den Vorteil der Temperaturbeständigkeit und der chemischen Neutralität. Der Nachteil sind die höheren Herstellungskosten bei individuellen Maßanfertigungen. Die in den Figuren 3 bis 6 dargestellten Außenelektroden 10 sind in materialtechnischer Hinsicht hingegen unkritisch.

Zum Aufbau des als Prototypen verwendeten Applikators 8 ist beispielsweise einfach ein Rohr aus Eisen mit einem Durchmesser vom 50 mm, einer Länge von 10 cm und mit einer Materialstärke der Wandung von 1,5 mm verwendet worden.
Zur detaillierten Erläuterung der elektrischen Verhältnisse im Applikator 8 werde nun noch einmal die Figur 4 betrachtet.

Die den Betrag der Feldstärke des elektrischen Feldes 16 im Feldraum 17 bestimmenden geometrischen Größen des Applikators 8 sind einerseits der äußere Radius 25 der Innenelektrode 9 und andererseits der innere Radius 26 der Außenelektrode 10.
Die Innenelektrode zeigt in Figur 4 im Querschnitt deutlich die Perforierung 29 mit den durch Stanzungen geformten, in den Feldraum 17 zeigenden Ausbuchtungen, die die Feldstärke des elektrischen Feldes 16 durch Kanteneffekte oder Spitzeneffekte zusätzlich lokal zu erhöhen vermag.

Beim Anlegen einer elektrischen Spannung zwischen der Innenelektrode 9 und der Außenelektrode 10 bildet sich zwischen den Elektroden ein elektrisches Feld 16 aus, dessen Betrag an der Innenelektrode 9 maximal ist und in etwa umgekehrt proportional zur Entfernung zur Mittelachse der Innenelektrode 9 nach außen hin geringer wird. Wäre kein dielektrischer Isolator im Feldraum vorhanden, so würde das elektrische Feld 16 im gesamten Feldraum 17 in der oben beschriebenen Form gleichmäßig verteilt in Richtung zur Außenelektrode 10 geringer werden. Durch das Einbringen des dielektrischen Isolators 11 und formschlüssige Positionierung desselben an die Außenelektrode 10 ohne einen nennenswerten Luftspalt zwischen dem dielektrischen Isolator 11 und der Außenelektrode 10, verteilt sich das elektrische Feld 16 in radialer Richtung inhomogen, denn die radiale Komponente der elektrischen Feldstärke ist in dieser Anordnung unstetig und ihr Betrag springt an der Grenzfläche der unterschiedlichen Medien. In Abhängigkeit von der Permittivität des Isolatorwerkstoffes wird nun die Feldstärke des elektrischen Feldes 16 im Feldraum 17 zwischen dem dielektrischen Isolator 11 und der Innenelektrode 9 um den Wert der Permittivität erhöht. Wird also beispielsweise als Material für den dielektrischen Isolator Aluminiumkeramik mit einer Permittivität von 10 verwendet, so erhöht sich die Feldstärke des elektrischen Feldes 16 im verbleibenden Feldraum 17 um das Zehnfache.

Es bietet sich somit die Möglichkeit, zur Erhöhung der gewünschten Feldstärke des elektrischen Feldes 16 im Feldraum 17 anstelle einer ständig weiteren Erhöhung des Wechselspannungswertes, was mit zunehmend steigender Amplitude zu Isolationsproblemen führt, ein Material mit besonders hoher Permittivitätszahl und hinreichender Dicke zum Aufbau des dielektrischen Isolators 11 zu verwenden.

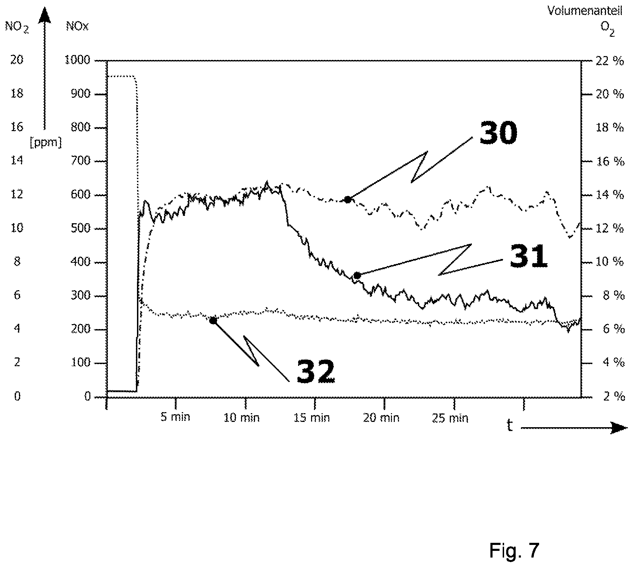

Die Wirksamkeit der hier vorgestellten erfindungsgemäßen Vorrichtung und des zugehörigen Verfahrens zeigt die Figur 7 als typisches Beispiel der zahlreichen Messungen im Zusammenhang mit der Erprobung der realisierten Prototypen für die Applikatoren.

Es ist für die Messungen als Beispiel für eine Verbrennungskraftmaschine ein kleiner mit Benzin betriebener 4-Takt-Ottomotor mit Vergaser und abschaltbarer elektronischer Regelung verwendet worden. Dieser Motor ist mit seiner Antriebsachse an einen elektrischen Generator gekoppelt. Durch unterschiedliche Lasten, die am Generatorausgang angeschlossen werden, wird der Motor in einem auf diese Weise einstellbaren stationären Lastbetrieb für den Zeitraum einer Messung betrieben. Als Messgerät für die Schadstoffkonzentration im Abgas 3 wurde das Abgasanalysegerät "Testo 350" der Firma MESSBAR.DE verwendet. Es ist mit Gasaufbereitung, Pumpe, Messzellen und Auswerte-Elektronik ausgestattet, besitzt die Seriennummer 02141848 und ist vom TÜV für die betreffenden Messungen zugelassen.

Die Messung im heißen Abgasstrom ist keineswegs einfach und wegen der toxischen Abgase auch nicht ohne entsprechende Abzugsvorrichtungen ratsam. Auch ist die Konzentration der j e-weiligen Bestandteile insbesondere von Schadstoffen im Abgas von sehr vielen Parametern abhängig. Grenzwerte lassen sich leicht definieren - jedoch bereits das Messen der jeweiligen Schadstoffkonzentrationen zeigt, dass stationäre Zustände bei ungeregelten Motoren sich nicht einfach über einen längeren Zeitraum erhalten lassen. Bereits geringe Lastwechsel oder eine kurze Regenschauer oder einfach nur eine Fehlzündung verschieben die Messwerte zu abweichenden Werten. Um im heißen Abgasstrom ohne Brandverletzungen und ohne Zerstörung der Messgeräte überhaupt Messen zu können, wird zur Kühlung ein Teil der Umgebungsluft in einer Messkammer hinzugefügt. Die Messergebnisse sind also keine absoluten Größen für die im Abgas enthaltenen Schadstoffe, sondern es handelt sich lediglich um experimentell ermittelte relative Messwerte. Anhand der relativen Messwerte kann die Konzentration der Schadstoffe im Abgas 3 zahlenmäßig nicht exakt angegeben werden. Jedoch gestattet diese Form der Messung die Beurteilung der Tendenz der Wirksamkeit der jeweiligen Maßnahmen. Es kann also beurteilt werden, ob sich durch die getroffene Maßnahme die Schadstoffkonzentration von Schadstoffen verringert oder nicht. Es kann jedoch nicht quantitativ exakt bestimmt werden, wie viel Schadstoff direkt aus der Verbrennungsmaschine ausgestoßen wird.

Unter den erwähnten Gesichtspunkten sind auch die in Figur 7 gezeigten Messwerte zu betrachten. Die Messkurven schwanken und pendeln um Mittelwerte herum. Trotzdem sind die Tendenzen klar erkennbar. Über einen Aufzeichnungszeitraum von etwa 35 Minuten sind die typischen Ergebnisse der Abgasmessungen für einen Testlauf wiedergegeben. Bei Beginn der Aufzeichnung ist der Motor zunächst noch ausgeschaltet. Der Volumenanteil der Konzentration an Sauerstoff 32 liegt bei 21 %. Es sind keine nennenswerten Volumenanteile an Stickoxiden mit den gewählten Einstellungen des Messgerätes nachweisbar. Die Messwerte liegen in der unteren Begrenzung.

Nach zwei Minuten wird der Motor eingeschaltet. Abrupt fällt der relative Volumenanteil der Konzentration an Sauerstoff 32 auf Werte knapp oberhalb von 6 %. Der relative Volumenanteil der Konzentration an Stickstoffdioxid 31 springt auf einen Wert von 11 ppm und steigt während der Warmlaufphase des Motors auf einen Wert von über 12 ppm. Der relative Volumenanteil der Konzentration an der Gesamtheit aller Stickoxide 30 steigt innerhalb einer Minute bei der vorgegebenen Motorbelastung auf Werte oberhalb von 600 ppm.

Nach etwa 12 Minuten wird der Applikator 8 mit einer von der Wechselspannungsquelle 13 in den Applikator 8 injizierten elektrischen Leistung 34 von etwa 50 Watt aktiviert. Es zeigt sich ein signifikantes Absinken des relativen Volumenanteils der Konzentration an Stickstoffdioxid 31. Während der Abfall zunächst relativ rasch erfolgt, reduziert sich die Geschwindigkeit des Abstieges im Kurvenverlauf. Nach etwa einer viertel Stunde ist der Wert um mehr als die Hälfte abgesunken. Dieser Effekt ist reproduzierbar. Wird die Energiezufuhr zum Applikator abgeschaltet, steigt der Messwert wieder an. Wird der Applikator dann angeschaltet, so fällt der gemessene Wert wieder ab. Der relative Volumenanteil der Konzentration an der Gesamtheit aller Stickoxide 30 zeigt bei der hier dokumentierten Messung jedoch keine sehr nennenswerte Reaktion auf die Energiezufuhr.

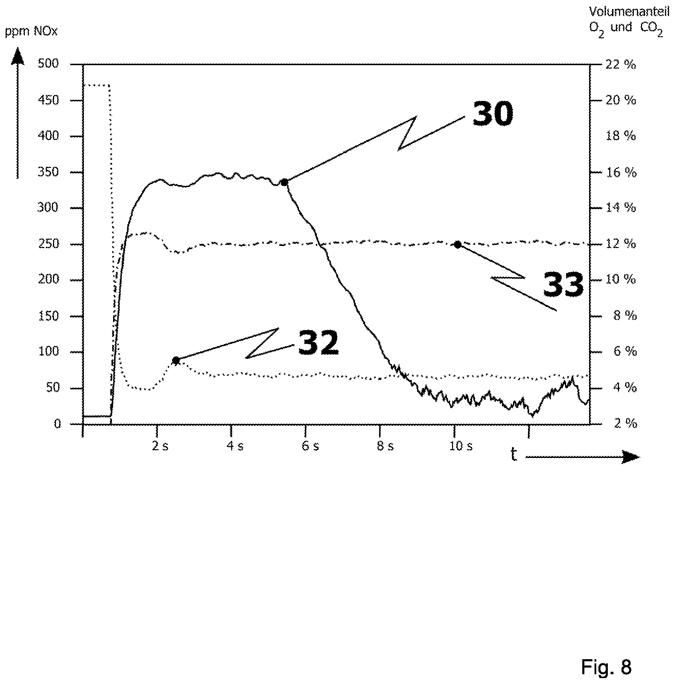

Es wird für eine weitere Messung eine Wechselspannungsquelle 13 mit einer höheren Leistung beschafft und ein verbesserter Versuchsaufbau für erneute Messungen verwendet. Der Motor ist vor dieser Messung bereits mehrmals betrieben worden und befindet sich bereits auf Betriebstemperatur. Diese relativen Messergebnisse sind in der Figur 8 dargestellt. Zu beachten ist die gegenüber der Figur 7 stark veränderte Zeitachse. Es ist ein nur kurzes Zeitfenster von etwa 15 Sekunden dargestellt, um die rasche chemische Reaktion nach dem Aktivieren des Applikators detailliert aufzuzeigen.

Bei Beginn der Aufzeichnung ist der Motor zunächst noch ausgeschaltet. Der Volumenanteil der Konzentration an Sauerstoff 32 liegt bei 21 %. Es sind keine nennenswerten Volumenanteile an Kohlendioxid 33 und an der Gesamtheit aller Stickoxide 30 mit den gewählten Einstellungen des Messgerätes nachweisbar. Die Messwerte liegen in der unteren Begrenzung.

Nach etwa einer Sekunde wird der Motor eingeschaltet. Abrupt fällt der relative Volumenanteil der Konzentration an Sauerstoff 32 auf Werte knapp oberhalb von 5 % und der relative Volumenanteil der Konzentration an Kohlendioxid 33 steigt auf Werte von 12 %. Der relative Volumenanteil der Konzentration an der Gesamtheit aller Stickoxide 30 springt bei dieser Versuchsanordnung auf einen Wert von etwa 350 ppm. Nach etwa 5 Sekunden wird der Applikator 8 mit einer von der Wechselspannungsquelle 13 in den Applikator 8 injizierten elektrischen Leistung 34 von nun etwa 150 Watt aktiviert. Innerhalb von fünf Sekunden sinkt der relative Volumenanteil der Konzentration an der Gesamtheit aller Stickoxide 30 von einem Wert von 350 ppm auf einen Wert von unter 50 ppm ab und verbleibt dort.

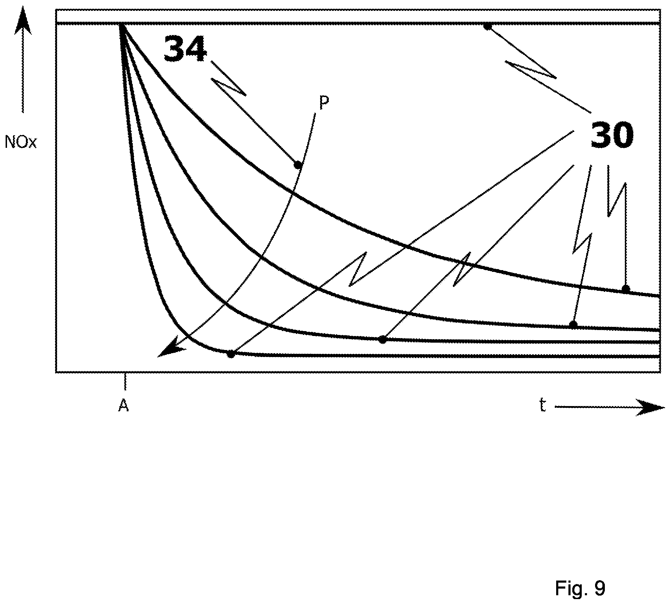

Weitere diesbezügliche Experimente legen die Vermutung nahe, dass sich die Reduzierung des relativen Volumenanteils der Konzentration an Schadstoffen tendenziell so verhält, wie es in der Figur 9 schematisch für Stickoxide dargestellt ist.

Entscheidend für die Wirksamkeit des Verfahrens ist anscheinend die Größe der von der Wechselspannungsquelle 13 in den Applikator 8 injizierten elektrischen Leistung 34. Je nach betreffender Substanz scheint es Schwellenwerte zu geben.

Während für die Messungen zu der Darstellung in Figur 7 eine von der Wechselspannungsquelle 13 in den Applikator 8 injizierten elektrischen Leistung 34 mit einer Größe von etwa 50 Watt angewendet wurde, so erfolgte für die Messungen zu der Darstellung in Figur 8 eine von der Wechselspannungsquelle 13 in den Applikator 8 injizierten elektrischen Leistung 34 mit einer Größe von etwa 150 Watt.

Es ist zur Ermittlung der in der Figur 8 dargestellten Messwerte also eine um 300 % höhere elektrische Leistung 34 in denselben Applikator 8 injiziert worden.

Aus der Darstellung in Figur 7 ist erkennbar, dass zwar der relative Volumenanteil der Konzentration an Stickstoffdioxid 31 signifikant abgesenkt werden konnte, jedoch hat die injizierte elektrische Leistung 34 nicht ausgereicht, um auch den relativen Volumenanteil der Konzentration der Gesamtheit aller Stickoxide 30 im Abgas 3 signifikant abzusenken. Erst beim deutlich höheren Wert der injizierten Leistung ist dies der Fall. Bei einer injizierten elektrischen Leistung 34 mit einer Größe von etwa 150 Watt zeigt sich ein sehr rasches Absinken des relativen Volumenanteils der Konzentration an der Gesamtheit aller Stickoxide 30 um mehr als 85 % innerhalb von fünf Sekunden.

Auch aus weiteren in diesem Zusammenhang durchgeführten Messungen ergibt sich tendenziell der in Figur 9 qualitativ dargestellte prinzipielle zeitabhängige Zusammenhang zwischen dem beispielhaft gewählten relativen Volumenanteil der Konzentration der Gesamtheit aller Stickoxide 30 im Abgas 3 und der von der Wechselspannungsquelle 13 in den Applikator 8 injizierten elektrischen Leistung 34.

Es ist offensichtlich ein vom Aufbau des Applikators 8 abhängiger Mindestwert an in den Applikator injizierter elektrischer Leistung 34 erforderlich, um überhaupt eine signifikante Wirkung zu erzielen, sonst verbleibt der hier beispielhaft gewählte relative Volumenanteil der Konzentration der Gesamtheit aller Stickoxide 30 im Abgas 3 unbeeinflusst auf dem von dem Motor, also der Vorrichtung 5, in der ein Verbrennungsprozess stattfindet, verursachten Wert. Dies ist in der Figur 9 mit dem obersten Teil des zeitabhängigen Kurvenverlaufes, mit der in den Applikator 8 injizierten elektrischer Leistung 34 als Parameter, als durchgehende gerade Linie dargestellt, die sich auch nach dem Zeitpunkt des Aktivierens des Applikators, im Diagramm mit dem Buchstaben A markiert, nicht ändert. Wird jedoch ein Schwellenwert überschritten, so erfolgt ein von der Größe der jeweiligen injizierter elektrischer Leistung 34 abhängiger Abfall des relativen Volumenanteils der Konzentration der Gesamtheit aller Stickoxide 30, der hinsichtlich des zeitlichen Verlaufs an eine Form einer exponentiellen Entladungskurve erinnert. Dabei ist sowohl die Geschwindigkeit des Abfalls als auch der Grad der Verminderung mit der Größe des Wertes der injizierten elektrischen Leistung 34 verknüpft.

Es ist die Wirksamkeit der hier vorgestellten erfindungsgemäßen Vorrichtung auf den relativen Volumenanteils der Konzentration von Stickstoffdioxid 31 und von der Gesamtheit aller Stickoxide 30 im Abgas von Verbrennungsmaschinen reproduzierbar gezeigt werden. Es ist gezeigt worden, dass durch die Höhe des Wertes der jeweiligen injizierter elektrischer Leistung 34 entweder nur der relative Volumenanteil der Konzentration von Stickstoffdioxid 31 oder aber der relative Volumenanteil der Konzentration der Gesamtheit aller Stickoxide 30 gezielt ausgewählt werden kann.

Als chemisch wirksame Ursache für die Reduzierung der Schadstoffe im Abgas 3 wird spekulativ als Erklärung die Umwandlung des molekularen Disauerstoffs der Luft 1 in durch das Plasma im Feldraum 17 angeregte Zustände des Sauerstoffes vermutet, wobei die zur Aktivierung benötigte Energie durch die in das Plasma im Feldraum 17 des Applikators injizierte elektrischer Leistung 34 bereit gestellt wird. So ist es theoretisch denkbar, durch gleichzeitige Bestrahlung mit Photonen und Kollision mit Molekülen Phononen, wie es im Plasma durchaus der Fall sein kann, den chemisch signifikant aktiveren Singulett-Sauerstoff mit einer Anregungsenergie von 157 kJ pro Mol oder auch den Triplett-Sauerstoff mit einer Anregungsenergie von 94 kJ pro Mol aus dem bekannten reaktionsträgeren molekularen Disauerstoff der Luft 1 zu generieren. Diese Formen des Sauerstoffs sind zwar metastabil und haben nur eine begrenzte Lebensdauer. Sie werden derzeit beispielsweise als starkes selektives Oxydationsmittel in der organischen Chemie verwendet.

Die Auswirkungen auf weitere Schadstoffkonzentrationen und auch auf die Feinstaubproblematik sind Gegenstand weiterer Untersuchungen. Dazu soll die Wirksamkeit des Applikators 8 weiter verbessert werden. Zur Erhöhung des Durchsatzvolumens sind Bündelungen in Form einer gebündelten Applikatorvorrichtung 23 gebildet aus mehreren einzelnen Einheiten von Applikatoren 8 ein zweckmäßiges Mittel.

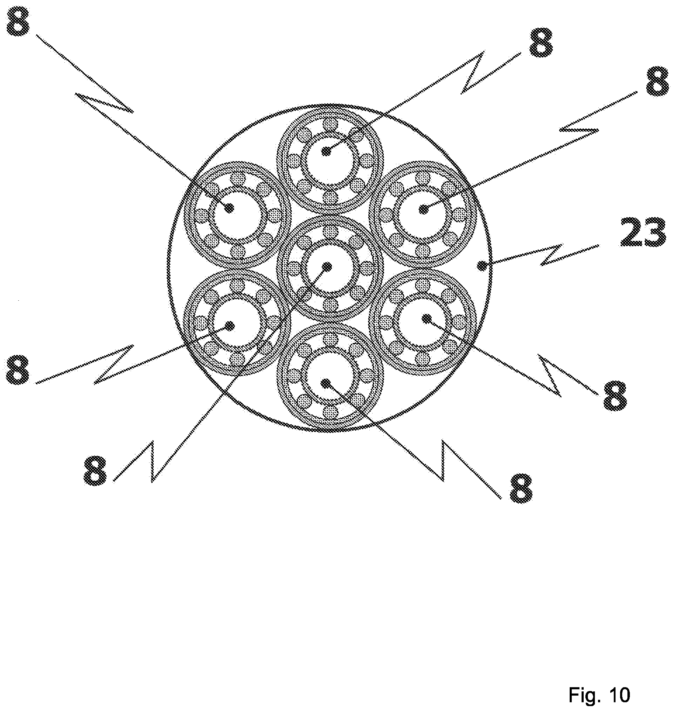

Die Figur 10 zeigt beispielhaft schematisch ein Ausführungsbeispiel einer solchen Anordnung mit mehreren zu einer Einheit zusammengefassten Applikatoren 8 in der Frontalansicht. Durch diese raumsparende Anordnung der Teile als Ganzes wird die gebündelte Applikatorvorrichtung 23 verhältnismäßig klein, wenig Platz beanspruchend und sie weist eine einfache äußere Form auf. Bei gleichem Wert der maximalen Amplitude der Wechselspannung erhöht sich die Ausbeute signifikant durch die Parallelschaltung der Systeme. Es ist jedoch mit einer Erhöhung der für den Betrieb erforderlichen Stromstärke zu rechnen, da sich die erforderlichen Stromstärken der einzelnen Applikatoren 8 addieren.

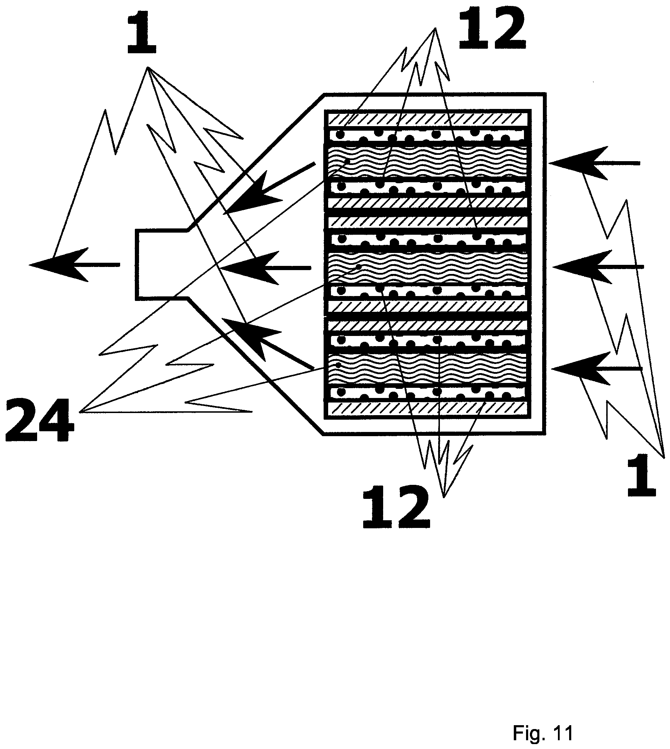

Die Figur 11 zeigt schematisch das zuvor beschriebene Ausführungsbeispiel der zu einer Einheit zusammengefassten mehreren Applikatoren 8 zu gebündelten Applikatorvorrichtung 23 in der seitlichen geschnittenen Ansicht. In dieser Darstellung ist deutlich zu erkennen dass die für den Verbrennungsprozess erforderliche Luft 1 großflächig sowohl die Halterungen 12 zur Fixierung der Elektroden und des Abstandes der Elektroden aus dielektrischem Material, die sich innerhalb des Feldraumes 17 befinden, als auch der feldfreie Volumenbereich 24 problemlos parallel durchströmen und dann vermischt und chemisch aktiviert in Richtung Verbrennungskraftmaschine durch eine trichterförmige Gestaltung des Gehäuses der gebündelten Applikatorvorrichtung 23 strömen kann.

Eine detailliertere Beschreibung der für den Betrieb des Applikators 8 erforderlichen Wechselspannungsquelle 13 und des darauf basierenden Verfahrens wird nachfolgend mit Hilfe der Figur 12 am Beispiel eines Einsatzes in einem Kraftfahrzeug erläutert. Diese Erläuterungen gelten qualitativ ohne Einschränkung ebenfalls für die gebündelte Applikatorvorrichtung 23.

Das elektrische Verhalten des Applikators 8 ist charakterisiert durch eine spannungsabhängige Wirkleistungsaufnahme und einer variablen Kapazität. Die Wirkleistungsaufnahme wird durch die Erzeugung von Plasma im Applikator 8 und durch die aktivierende Wechselwirkung mit dem Sauerstoff der Luft 1 verursacht. So wird beispielsweise zur Erzeugung von hochreaktivem Singulett-Sauerstoff eine Aktivierungsenergie von 157 kJ pro Mol benötigt. Sollen also innerhalb einer Minute 2 Liter Singulett-Sauerstoff erzeugt werden, so ist für diesen Vorgang eine elektrische Leistung von etwa 250 W erforderlich. Mit zunehmender Spannung steigt auch die durch die Filamente des Plasmas fließende Stromstärke. Somit kann für den stationären Betrieb des Applikators in erster Näherung ein Lastwiderstand für die Beschreibung des elektrischen Verhaltens im bestimmungsgemäßen Betriebszustand gewählt werden.

Das kapazitive Verhalten ergibt sich aus dem geometrischen Aufbau des Applikators 8, der als Zylinderkondensator mit eingefügtem Dielektrikum beschrieben werden kann. Durch den wetterbedingten unterschiedlichen Feuchtigkeitsgrad der den Applikator 8 durchströmenden Luft 1 ändert sich die Permittivität der Luft, was zu unterschiedlichen Kapazitätswerten führt. Daher kann der Applikator als Zylinderkondensator mit variablem Kapazitätswert betrachtet werden. Somit ergibt sich das in Figur 12 gezeigte äquivalente Ersatzschaltbild 44 als Parallelschaltung eines Widerstandes mit einer variablen Kapazität, welches das charakteristische elektrische Verhalten des Applikators 8 beschreibt.

In der Figur 12 wird also anstelle des Applikators 8 die äquivalente Ersatzschaltung 44 verwendet, um die elektrischen Eigenschaften und die Wechselwirkung mit der Wechselspannungsquelle 13 zu beschreiben.

Die äquivalente Ersatzschaltung 44 bildet zusammen mit der Induktivität der Hochspannungswicklung 20 des Transformators 19 einen bedämpften Parallelresonanzkreis. Dies bedeutet, wenn die Frequenz der von der Wechselspannungsquelle 13 erzeugten Wechselspannung gleich der aktuellen Resonanzfrequenz ist, dann steigt die Spannung am Applikator 8, also die Spannung zwischen dem Hochspannungsanschluss 21 und dem Massepotentialanschluss 18 auf ihren höchstmöglichen Wert.

Die Wechselspannungsquelle 13 benötigt für die Bereitstellung der verschiedenen Spannungen eine Betriebsenergie. Diese bezieht sie mit Hilfe der Betriebsspannungsklemmen 35 aus dem Bordnetz des Kraftfahrzeuges, welches schwankende Spannungswerte im Bereich zwischen 10 V und 14 V aufweisen kann. Die Betriebsspannungsklemmen 35 sind unmittelbar mit der Betriebsspannungsversorgungseinheit 36 der Wechselspannungsquelle 13 verbunden. In der Betriebsspannungsversorgungseinheit 36 wird eine konstante Versorgungsspannung 45 erzeugt und über elektrische Leiter sowohl dem Wechselspannungstreiber 37 als auch der elektronischen Steuereinheit 40 zugeführt. Zusätzlich wird eine variable Versorgungsspannung 39 erzeugt, welche die Leistungsendstufe 38 speist. Dabei ist die von der Leistungsendstufe an den Transformator 19 abgegebene Leistung direkt abhängig von der Größe der variablen Versorgungsspannung 39. Besitzt die Versorgungsspannung einen geringen Wert von z. B. lediglich 5 V, so fließt durch die in der Leistungsendstufe 38 verwendeten Transistoren lediglich eine geringe Stromstärke von etwa 1 A und die im Transformator umgesetzte Leistung beträgt nur ca. 5 W. Wird hingegen die variable Versorgungsspannung 39 auf einen Wert von 30 V erhöht, so ergibt sich bei der für den Prototyp verwendeten Schaltung typischerweise eine Stromstärke von 20 A und die im Transformator umgesetzte Leistung beträgt nun 600 W.

Auf diese Weise lässt sich die von der Wechselspannungsquelle in den Applikator injizierte elektrische Leistung 34 präzise einstellen.

Um Informationen über den aktuellen Betriebszustand des Applikators 8 zu erhalten, dienen eine auf dem Transformator 19 angebrachte Hilfswicklung 42 und ein zwischen dem Erdungsanschluss 22 und dem Massepotentialanschluss 18 geschalteter Messwiderstand 43. Die in der Hilfswicklung 42 auftretende Spannung ist direkt proportional der am Applikator 8 anliegenden Spannung und wird über die Kontrollspannungsleitung 47 der elektronischen Steuereinheit 40 zugeführt. Diese erzeugt ein Frequenzsteuersignal 48 und speist dieses in den Wechselspannungstreiber 37 zur weiteren Verarbeitung ein. Durch einen programmierten Suchalgorithmus kann die elektronische Steuereinheit 40 durch stetige leichte Variationen des Frequenzsteuersignals und durch die dadurch in der Hilfswicklung 42 erzeugte Kontrollspannung erkennen, ob sich der Applikator 8 in Resonanz befindet. Wegen der charakteristischen und eindeutigen Form der Resonanzkurve für einen bedämpften Resonanzkreis muss lediglich durch eine Variation der Frequenz der vom Wechselspannungstreiber 37 an die Leistungsendstufe 38 abgegebenen Ansteuersignale stets der Maximalwert der Spannung an der Hilfswicklung 44 erzeugt werden, dann wird auch der Applikator 8 als Resultat dieser Maßnahme in Resonanz betrieben.

Die jeweils im Applikator 8 wirksam werdende Wirkleistung lässt sich von der elektronischen Steuereinheit 40 errechnen, wenn zusätzlich zur über die Kontrollspannungsleitung 47 übermittelten Spannung der Hilfswicklung 42 auch noch die Stromstärke ermittelt wird, die aktuell durch den Applikator 8 fließt. Der Messwiderstand 43 wandelt den Stromfluss durch den Applikator 8 in eine dazu proportionale Signalspannung um. Diese wird über eine Stromflusssignalspannungsleitung 46 der elektronischen Steuereinheit 40 zugeführt. Je nach Einstellung oder Programmierung berechnet und erzeugt die elektronische Steuereinheit 40 ein entsprechendes Leistungssteuersignal 49 und speist dieses in die Betriebsspannungsversorgungseinheit 36, welche dann eine dazu passende variable Versorgungsspannung 39 für die Leistungsendstufe 38 generiert und so die von der Wechselspannungsquelle in den Applikator 8 injizierte elektrische Leistung 34 passend einstellt..

Eine digitale Schnittstelle 41 dient der Programmierung oder der Kommunikation mit der elektronischen Steuereinheit 40. Es sind für die elektronische Steuereinheit 40 entsprechend angepasste Realisierungen möglich, die an dieser Stelle nicht diskutiert werden sollen. Fertige universelle Mikrokontroller Platinen mit einsteckbaren Erweiterungen von einfachen Tastaturen bis hin zu aktiven Eingabedisplays sind derzeit sehr preiswert verfügbar und können zur komfortablen Bedienung entsprechend den Anforderungen zusammengestellt werden.

Die hier vorgestellte Vorrichtung und das darauf basierende Verfahren benötigt zum bestimmungsgemäßen Betrieb elektrische Energie. Bei einem typischen Kraftfahrzeug mit Verbrennungsmotor würde als Energielieferant die Batterie oder die Lichtmaschine des Kraftfahrzeugs dienen, was bedeutet, dass der Verbrennungsmotor neben seiner für die Ortsbewegung erforderlichen mechanischen Leistung noch zusätzlich eine für den Betrieb des Applikators 8 erforderliche mechanische Leistung aufbringen muss, um die für den Betrieb Applikators 8 notwendige injizierte elektrischer Leistung 34 mit Hilfe der Lichtmaschine zu generieren bzw. die Batterie entsprechend zu laden.

Für den Fall, dass eine herkömmliche Katalysatorvorrichtung beispielsweise wegen Unterschreitung der Außentemperatur zur Schonung des Motors vorübergehend abgeschaltet werden muss oder dass die für den Betrieb der Abgasreinigungsanlage notwendige zusätzliche Substanz, wie beispielsweise eine bei der SCR-Technik verwendete Harnstoff-Lösung, aufgebraucht ist, wodurch die Schadstoffreduzierung versagt, könnten Sensoren im Abluftkanal die erhöhten Stickoxidkonzentrationen ermitteln und eine zeitlich beschränkte Aktivierung der Applikatorvorrichtung 23 mit Hilfe einer geeigneten Steuerelektronik einleiten. So wäre eine kontinuierliche Schadstoffminderung mit einem hohen Grad an Sicherheit gewährleistet. Dies ist nur ein Beispiel für die vielfältigen Anwendungsmöglichkeiten der für Verbrennungsmaschinen aller Art geeigneten Vorrichtung und des darauf basierenden Verfahrens. Durch den geringen technischen Aufwand und die universelle Anwendbarkeit sind je nach Problemstellung jegliche Formen der angepassten technischen Lösungen möglich, wenn genügend elektrische Energie zur Verfügung steht.

### BEZUGSZEICHENLISTE

- 1: Luft
- 2: zu verbrennende Substanz
- 3: Abgas
- 4: Vorrichtung zur Mischung der Luft mit der zu verbrennenden Substanz
- 5: Vorrichtung in der ein Verbrennungsprozess stattfindet
- 6: Abgasfilter
- 7: Auspuffanlage
- 8: Applikator
- 9: Innenelektrode
- 10: Außenelektrode
- 11: dielektrischer Isolator
- 12: Halterung zur Fixierung der Elektroden und des Abstandes der Elektroden
- 13: Wechselspannungsquelle
- 14: Vorrichtung zum Einstellen einer variable Betriebsfrequenz
- 15: Vorrichtung zur Einstellung der dem Applikator zugeführten elektrischen Leistung
- 16: elektrisches Feld
- 17: Feldraum
- 18: Massepotentialanschluss
- 19: Transformator
- 20: Hochspannungswicklung
- 21: Hochspannungsanschluss
- 22: Erdungsanschluss
- 23: gebündelte Applikatorvorrichtung
- 24: Innenraum (feldfreier Volumenbereich)
- 25: äußerer Radius der Innenelektrode
- 26: innerer Radius der Außenelektrode
- 27: feinmaschiges metallisches Netz
- 28: Verbindungsstelle
- 29: Perforierung
- 30: Gesamtheit aller Stickoxide
- 31: Stickstoffdioxid
- 32: Sauerstoff
- 33: Kohlendioxid
- 34: von der Wechselspannungsquelle in den Applikator injizierte elektrische Leistung
- 35: Betriebsspannungsklemmen
- 36: Betriebsspannungsversorgungseinheit
- 37: Wechselspannungstreiber
- 38: Leistungsendstufe
- 39: variable Versorgungsspannung
- 40: elektronische Steuereinheit
- 41: digitale Schnittstelle
- 42: Hilfswicklung
- 43: Messwiderstand
- 44: äquivalente Ersatzschaltung
- 45: konstante Versorgungsspannung
- 46: Stromflusssignalspannungsleitung
- 47: Kontrollspannungsleitung
- 48: Frequenzsteuersignal
- 49: Leistungssteuersignal

## Patentansprüche

1. Plasmaapplikator (8) zur Behandlung eines Gases in einem durch Anlegen einer Wechselspannung zwischen einer Außenelektrode (10) und einer Innenelektrode (9) gebildeten Feldraum (17), umfassend:
- einen Gaseinlass und einen Gasauslass zum Einleiten von zu behandelndem Gas in den Feldraum (17),
- eine zwischen dem Gaseinlass und dem Gasauslass angeordnete Innenelektrode (9),
- eine die Innenelektrode (9) mit einem Abstand umgebende rohrförmige Außenelektrode (10) und
- einen zumindest zwischen der Innenelektrode (9) und der Außenelektrode (10) angeordneten dielektrischen Isolator (11), **dadurch gekennzeichnet, dass** die Innenelektrode (9) als hohles Rohr mit wenigstens einer Gaseinlassöffnung und wenigstens einer Gasauslassöffnung derart ausgebildet ist, dass im Betrieb ein Teil des in den Plasmaapplikator (8) geleiteten unbehandelten Gases durch einen in der Innenelektrode (9) gebildeten feldfreien Innenraum (24) zu dem Gasauslass strömt.

2. Plasmaapplikator (8) nach Anspruch 1,
wobei die Innenelektrode mit einer Vielzahl von Öffnungen versehen ist, die derart ausgebildet sind, dass im Betrieb des Plasmaapplikators (8) ein Gasübertritt des unbehandelten Gases und eines behandelten Gases von dem Innenraum der Innenelektrode (24) zum Feldraum (17) und umgekehrt erfolgt, und wobei das austretende Gas durchmischt ist.

3. Plasmaapplikator (8) nach Anspruch 2,
wobei dass die Öffnungen mit einem zur Außenelektrode (10) vorstehenden Rand versehen sind.

4. Plasmaapplikator (8) nach einem der Ansprüche 1 bis 3,
wobei die Innenelektrode (9) und die Außenelektrode (10) in Form von konzentrischen Rohren ausgebildet sind.

5. Plasmaapplikator (8) nach einem der Ansprüche 1 bis 4,
wobei die Innenelektrode (9) und die Außenelektrode (10) zylindrisch mit jeweils zwei Stirnseiten und jeweils einer Mantelfläche ausgebildet sind.

6. Plasmaapplikator (8) nach Anspruch 5,
wobei die Stirnseiten der Innenelektrode (9) und der Außenelektrode (10) offen sind.

7. Plasmaapplikator (8) nach einem der Ansprüche 1 bis 6,
wobei das Volumen des Innenraums (24) der Innenelektrode (9) größer ist als das Volumen des Feldraums (17).

8. Plasmaapplikator (8) nach einem der Ansprüche 1 bis 7,
wobei der dielektrische Isolator (11) auf der der Außenelektrode (10) zugewandten Seite der Innenelektrode (9) angeordnet ist.

9. Plasmaapplikator (8) nach einem der Ansprüche 1 bis 7,
wobei der dielektrische Isolator (11) auf der der Innenelektrode (9) zugewandten Seite der Außenelektrode (10) angeordnet ist.

10. Plasmaapplikator (8) nach einem der Ansprüche 1 bis 9,
wobei in dem Feldraum (17) eine Vielzahl von dielektrischen Brücken (12) zwischen der Außenelektrode (10) und dem dielektrischen Isolator (11) und/oder zwischen der Innenelektrode (9) und dem dielektrischen Isolator (11) angeordnet ist.

11. Plasmaapplikator (8) nach einem der Ansprüche 1 bis 10,
wobei die dielektrischen Brücken (12) als Halterungen für die Innenelektrode (9) ausgebildet sind.

12. Plasmaapplikator (8) nach einem der Ansprüche 10 oder 11,
wobei die dielektrischen Brücken (12) mit einer oberflächenvergrößernden Struktur versehen sind.

13. Plasmaapplikator (8) nach einem der Ansprüche 10 bis 12,
wobei sich die dielektrischen Brücken (12) kontinuierlich entlang der Innenelektrode (9) erstrecken.

14. Plasmaapplikator (8) nach einem der Ansprüche 10 bis 13,
wobei die dielektrischen Brücken (12) einstückig an dem dielektrischen Isolator (11) angeformt sind.

15. Plasmaapplikator (8) nach einem der Ansprüche 1 bis 14,
wobei der dielektrische Isolator (11) über die Randbereiche der Innenelektrode (9) und der Außenelektrode (10) hinaus verläuft.

16. Plasmaapplikator (8) nach einem der Ansprüche 1 bis 15,
wobei die dielektrischen Elemente (11, 12) aus Silikon oder einem keramischen Material bestehen.

17. Applikatoranordnung insbesondere zum Einbau in ein Kraftfahrzeug, umfassend wenigstens einen Plasmaapplikator (8) nach einem der Ansprüche 1 bis 16 und eine Wechselspannungsquelle (13) zum Anlegen einer Wechselspannung an die Elektroden (9, 10) des Plasmaapplikator (8).

18. Applikatoranordnung nach Anspruch 17,
wobei die Wechselspannungsquelle (13) Mittel zum Einstellen der dem Plasmaapplikator (8) zugeführten Leistung (15) und/oder der Frequenz (14) der angelegten Wechselspannung umfasst.

19. Applikatoranordnung (8) nach Anspruch 17 oder 18,
ferner umfassend eine Steuereinrichtung (40) zur automatischen Einstellung der Frequenz der Wechselspannung und/oder der dem Plasmaapplikator (8) zugeführten Leistung.

20. Applikatoranordnung nach Anspruch 19,
ferner umfassend wenigstens einen Sensor zur Erfassung wenigstens eines Parameters eines bei einem Verbrennungsprozess unter Verwendung von mit dem wenigstens einen Plasmaapplikator (8) behandelten Gas erzeugtem Abgas, wobei die Steuereinrichtung (40) die Frequenz und/oder die Leistung in Abhängigkeit von dem erfassten Parameter steuert.

21. Applikatoranordnung nach einem der Ansprüche 17 bis 20,
ferner umfassend ein den wenigstens einen Applikator vollständig umschließendes feinmaschiges metallisches Netz (27), vorzugsweise ein Netz mit einer Maschenweite im Bereich von 1 mm und darunter.

22. Applikatoranordnung nach einem der Ansprüche 17 bis 21,
wobei mehrere Plasmaapplikatoren (8) nach einem der Ansprüche 1 bis 16 parallelgeschaltet sind.

23. Verbrennungsmaschine, insbesondere Verbrennungsmotor, umfassend wenigstens einen Plasmaapplikator (8) nach einem der Ansprüche 1 bis 16 und/oder eine Applikatoranordnung nach einem der Ansprüche 17 bis 22.

24. Land-, Luft- oder Wasserfahrzeug mit einem Verbrennungsmotor und wenigstens einem Plasmaapplikator (8) nach einem der Ansprüche 1 bis 16 und/oder einer Applikatoranordnung nach einem der Ansprüche 17 bis 22.

25. Verfahren zur Schadstoffreduktion bei Verbrennungsprozessen,
wobei ein bei der Verbrennung zugeführtes Gas, insbesondere Luft, und/oder ein bei der Verbrennung entstehendes Gas durch einen zwischen einer Außenelektrode (10) und einer Innenelektrode (9) gebildeten Feldraum (17), in dem durch Anlegen einer Wechselspannung an die Elektroden (9, 10) ein elektrisches Feld (16) erzeugt wird, geleitet wird, **dadurch gekennzeichnet, dass** eine als hohles Rohr mit wenigstens einem Gaseinlass und wenigstens einem Gasauslass ausgebildete Innenelektrode (9) verwendet und ein Teil des unbehandelten Gases durch einen in der Innenelektrode (9) gebildeten feldfreien Innenraum (24) zu dem Gasauslass geleitet wird.

26. Verfahren nach Anspruch 25,
wobei eine Vermischung des in den Innenraum (24) geleiteten Gases mit dem in den Feldraum (17) geleiteten Gas erfolgt, insbesondere mittels einer Vielzahl von in die Innenelektrode (9) eingebrachten Gasdurchtrittsöffnungen (29).

27. Verfahren nach Anspruch 25 oder 26,
wobei zwischen die Außenelektrode (10) und die Innenelektrode (9) eine Wechselspannung im Bereich von etwa 50 kV mit einer Frequenz von etwa 10 bis 12 kHz angelegt wird.

28. Verfahren nach einem der Ansprüche 25 bis 27,
wobei wenigstens ein Parameter eines bei dem Verbrennungsprozess entstehenden Abgases erfasst und die an den Plasmaapplikator (8) angelegte Spannung und/oder die angelegte Frequenz in Abhängigkeit von dem Parameter geregelt werden.

29. Verfahren nach Anspruch 28,
wobei die Frequenz und/oder die Spannung so geregelt werden, dass der Plasmaapplikator (8) in Resonanz betrieben wird.

## Claims

1. A plasma applicator (8) for treating a gas in a field space (17) formed by applying an alternating voltage between an outer electrode (10) and an inner electrode (9), comprising:
- a gas inlet and a gas outlet for feeding gas to be treated into the field space (17),
- an inner electrode (9) arranged between the gas inlet and the gas outlet,
- a tubular outer electrode (10) surrounding the inner electrode (9) at a distance and
- a dielectric insulator (11) arranged at least between the inner electrode (9) and the outer electrode (10),
**characterised in that**
the inner electrode (9) is embodied as a hollow tube with at least one gas-inlet opening and at least one gas-outlet opening in such a manner that during operation, a part of the untreated gas fed into the plasma applicator (8) flows through a field-free interior space (24) formed within the inner electrode.

2. The plasma applicator (8) according to claim 1,
wherein the inner electrode is provided with a plurality of openings, which are embodied in such a manner that during operation of the plasma applicator (8) a gas transfer of the untreated gas and of a treated gas takes place from the interior space of the inner electrode (24) into the field space (17) and vice versa, and wherein the emerging gas is mixed.

3. The plasma applicator (8) according to claim 2,
wherein the openings are provided with an edge projecting towards the outer electrode (10).

4. The plasma applicator (8) according to any one of claims 1 to 3
wherein the inner electrode (9) and the outer electrode (10) are embodied in the form of concentric tubes.

5. The plasma applicator (8) according to any one of claims 1 to 4,
wherein the inner electrode (9) and the outer electrode (10) are embodied in a cylindrical manner with two end faces and one lateral surface in each case.

6. The plasma applicator (8) according to claim 5,
wherein the end faces of the inner electrode (9) and of the outer electrode (10) are open.

7. The plasma applicator (8) according to any one of claims 1 to 6,
wherein the volume of the interior space (24) of the inner electrode (9) is larger than the volume of the field space (17) .

8. The plasma applicator (8) according to any one of claims 1 to 7,
wherein the dielectric insulator (11) is arranged on the side of the inner electrode (9) facing towards the outer electrode (10) .

9. The plasma applicator (8) according to any one of claims 1 to 7,
wherein the dielectric insulator (11) is arranged on the side of the outer electrode (10) facing towards the inner electrode (9) .

10. The plasma applicator (8) according to any one of claims 1 to 9,
wherein, within the field space (17), a plurality of dielectric bridges (12) is arranged between the outer electrode (10) and the dielectric insulator (11) and/or between the inner electrode (9) and the dielectric insulator (11) .

11. The plasma applicator (8) according to any one of claims 1 to 10
wherein the dielectric bridges (12) are embodied as holders for the inner electrode (9).

12. The plasma applicator (8) according to any one of claims 10 or 11,
wherein the dielectric bridges (12) are provided with a surface enlarging structure.

13. The plasma applicator (8) according to any one of claims 10 to 12,
wherein the dielectric bridges (12) extend continuously along the inner electrode (9).

14. The plasma applicator (8) according to any one of claims 10 to 13,
wherein the dielectric bridges (12) are moulded in one piece on the dielectric insulator (11).

15. The plasma applicator (8) according to any one of claims 1 to 14,
wherein the dielectric insulator (11) extends beyond the edge regions of the inner electrode (9) and the outer electrode (10) .

16. The plasma applicator (8) according to any one of claims 1 to 15,
wherein the dielectric elements (11, 12) are made from silicone or a ceramic material.

17. An applicator arrangement, especially for installation in a motor vehicle, comprising at least one plasma applicator (8) according to any one of claims 1 to 16 and an alternating-voltage source (13) for applying an alternating voltage to the electrodes (9, 10) of the plasma applicator (8).

18. The applicator arrangement according to claim 17,
wherein the alternating-voltage source (13) comprises means for adjusting the applied power (15) and/or frequency (14) of the alternating voltage supplied to the plasma applicator (8).

19. The applicator arrangement (8) according to claim 17 or 18, further comprising a control device (40) for the automatic adjustment of the frequency of the alternating voltage and/or the power supplied to the plasma applicator (8).

20. The applicator arrangement according to claim 19, further comprising at least one sensor for registering at least one parameter of an exhaust gas produced in the combustion process with the use of gas treated with the at least one plasma applicator (8), wherein the control device (40) controls the frequency and/or the power dependent upon the registered parameter.

21. The applicator arrangement according to any one of claims 17 to 20,
further comprising a fine-meshed metallic net (27) completely enclosing the at least one applicator, preferably a net with a mesh width in the range of 1 mm and below.

22. The applicator arrangement according to any one of claims 17 to 21,
wherein several plasma applicators (8) according to any one of claims 1 to 16 are connected in parallel.

23. A combustion engine, especially an internal combustion engine, comprising at least one plasma applicator (8) according to any one of claims 1 to 16 and/or an applicator arrangement according to any one of claims 17 to 22.

24. A land, air or water vehicle with an internal combustion engine and at least one plasma applicator (8) according to any one of claims 1 to 16 and/or an applicator arrangement according to any one of claims 17 to 22.

25. A method for reducing pollutant emissions from combustion processes, wherein a gas, especially air, supplied during the combustion and/or a gas arising during the combustion is fed through a field space (17) formed between an outer electrode (10) and an inner electrode (9), in which an electrical field (16) is generated by applying an alternating voltage to the electrodes (9, 10),
**characterised in that**
an inner electrode (9) embodied as a hollow tube with at least one gas inlet and at least one gas outlet is used, and a part of the untreated gas is fed through a field-free interior space (24) formed within the inner electrode (9) to the gas outlet.

26. The method according to claim 25,
wherein a mixing of the gas fed into the interior space (24) with the gas fed into the field space (17) takes place, especially by means of a plurality of gas transfer openings (29) introduced in the inner electrode (9).

27. The method according to claim 25 or 26,
wherein, between the outer electrode (10) and the inner electrode (9), an alternating voltage in the range of approximately 50 kV with a frequency of approximately 10 to 12 kHz is applied.

28. The method according to any one of claims 25 to 27,
wherein at least one parameter of an exhaust gas arising during the combustion process is registered, and the voltage applied to the plasma applicator (8) and/or the applied frequency is regulated dependent upon the parameter.

29. The method according to claim 28,
wherein the frequency and/or the voltage are regulated in such a manner that the plasma applicator (8) is operated in resonance.

## Revendications

1. Applicateur de plasma (8) destiné à traiter un gaz dans un espace de champ (17) formé en appliquant une tension alternative entre une électrode externe (10) et une électrode interne (9), comportant :
- une entrée de gaz et une sortie de gaz pour introduire du gaz à traiter dans l'espace de champ (17),
- une électrode interne (9) agencée entre l'entrée de gaz et la sortie de gaz,
- une électrode externe tubulaire (10) entourant l'électrode interne (9) avec un certain espacement et
- un isolant diélectrique (11) agencé au moins entre l'électrode interne (9) et l'électrode externe (10),
**caractérisé en ce que**
l'électrode interne (9) est réalisée sous la forme d'un tube creux avec au moins un orifice d'entrée de gaz et au moins un orifice de sortie de gaz, de telle sorte qu'en fonctionnement, une partie du gaz non traité guidé dans l'applicateur de plasma (8) s'écoule jusqu'à la sortie de gaz à travers un espace intérieur sans champ (24) formé dans l'électrode interne (9).

2. Applicateur de plasma (8) selon la revendication 1, dans lequel l'électrode interne est munie d'une pluralité d'orifices qui sont réalisés de telle sorte que pendant le fonctionnement de l'applicateur de plasma (8), un passage de gaz du gaz non traité et d'un gaz traité a lieu à partir de l'espace intérieur de l'électrode interne (24) jusqu'à l'espace de champ (17) et inversement, et dans lequel le gaz sortant est mélangé de façon homogène.

3. Applicateur de plasma (8) selon la revendication 2,
dans lequel les orifices sont munis d'un bord faisant saillie jusqu'à l'électrode externe (10).

4. Applicateur de plasma (8) selon l'une des revendications 1 à 3,
dans lequel l'électrode interne (9) et l'électrode externe (10) sont réalisées sous forme de tubes concentriques.

5. Applicateur de plasma (8) selon l'une des revendications 1 à 4,
dans lequel l'électrode interne (9) et l'électrode externe (10) sont formées de manière cylindrique avec chacune deux faces frontales et chacune une surface d'enveloppe.

6. Applicateur de plasma (8) selon la revendication 5,
dans lequel les faces frontales de l'électrode interne (9) et de l'électrode externe (10) sont ouvertes.

7. Applicateur de plasma (8) selon l'une des revendications 1 à 6,
dans lequel le volume de l'espace intérieur (24) de l'électrode interne (9) est plus grand que le volume de l'espace de champ (17).

8. Applicateur de plasma (8) selon l'une des revendications 1 à 7,
dans lequel l'isolant diélectrique (11) est agencé sur le côté de l'électrode interne (9) dirigé vers l'électrode externe (10).

9. Applicateur de plasma (8) selon l'une des revendications 1 à 7,
dans lequel l'isolant diélectrique (11) est agencé sur le côté de l'électrode externe (10) dirigé vers l'électrode interne (9).

10. Applicateur de plasma (8) selon l'une des revendications 1 à 9,
dans lequel dans l'espace de champ (17) est agencée une pluralité de ponts diélectriques (12) entre l'électrode externe (10) et l'isolant diélectrique (11) et/ou entre l'électrode interne (9) et l'isolant diélectrique (11).

11. Applicateur de plasma (8) selon l'une des revendications 1 à 10,
dans lequel les ponts diélectriques (12) sont réalisés sous forme de supports pour l'électrode interne (9).

12. Applicateur de plasma (8) selon l'une des revendications 10 ou 11,
dans lequel les ponts diélectriques (12) sont munis d'une structure d'agrandissement de surface.

13. Applicateur de plasma (8) selon l'une des revendications 10 à 12,
dans lequel les ponts diélectriques (12) s'étendent de manière continue le long de l'électrode interne (9).

14. Applicateur de plasma (8) selon l'une des revendications 10 à 13,
dans lequel les ponts diélectriques (10) sont formés d'un seul tenant sur l'isolant diélectrique (11).

15. Applicateur de plasma (8) selon l'une des revendications 1 à 14,
dans lequel l'isolant diélectrique (11) s'étend au-delà des zones de bord de l'électrode interne (9) et de l'électrode externe (10).

16. Applicateur de plasma (8) selon l'une des revendications 1 à 15,
dans lequel les éléments diélectriques (11, 12) sont constitués de silicone ou d'une céramique.

17. Agencement d'applicateur en particulier pour un montage dans un véhicule automobile, comportant au moins un applicateur de plasma (8) selon l'une des revendications 1 à 16 et une source de tension alternative (13) pour appliquer une tension alternative aux électrodes (9, 10) de l'applicateur de plasma (8).

18. Agencement d'applicateur selon la revendication 17,
dans lequel la source de tension alternative (13) comporte des moyens pour régler la puissance (15) fournie à l'applicateur de plasma (8) et/ou la fréquence (14) de la tension alternative appliquée.

19. Agencement d'applicateur (8) selon la revendication 17 ou 18,
comportant en outre un dispositif de commande (40) pour régler automatiquement la fréquence de la tension alternative et/ou la puissance fournie à l'applicateur de plasma (8) .

20. Agencement d'applicateur selon la revendication 19,
comportant en outre au moins un capteur pour détecter au moins un paramètre d'un gaz généré lors d'un processus de combustion en utilisant du gaz traité par le au moins un applicateur de plasma (8), dans lequel le dispositif de commande (40) commande la fréquence et/ou la puissance en fonction du paramètre détecté.

21. Agencement d'applicateur selon l'une des revendications 17 à 20,
comportant en outre un treillis métallique à mailles fines (27) entourant entièrement le au moins un applicateur, de préférence un treillis avec une largeur de maille dans la plage de 1 mm et moins.

22. Agencement d'applicateur selon l'une des revendications 17 à 21,
dans lequel plusieurs applicateurs de plasma (8) selon l'une des revendications 1 à 16 sont montés en parallèle.

23. Moteur à combustion interne, en particulier un moteur à combustion, comportant au moins un applicateur de plasma (8) selon l'une des revendications 1 à 16 et/ou un agencement d'applicateur selon l'une des revendications 17 à 22.

24. Véhicule terrestre, aéronef ou navire équipé d'un moteur à combustion et comportant au moins un applicateur de plasma (8) selon l'une des revendications 1 à 16 et/ou un agencement d'applicateur selon l'une des revendications 17 à 22.

25. Procédé de réduction des émissions nocives lors de processus de combustion, dans lequel un gaz fourni lors de la combustion, en particulier de l'air, et/ou un gaz généré lors de la combustion est guidé à travers un espace de champ (17) formé entre une électrode externe (10) et une électrode interne (9), espace de champ dans lequel un champ électrique (16) est généré en appliquant une tension alternative aux électrodes (9, 10),
**caractérisé en ce que**
une électrode interne (9) réalisée sous la forme d'un tube creux avec au moins une entrée de gaz et au moins une sortie de gaz est utilisée et une partie du gaz non traité est guidée jusqu'à la sortie de gaz à travers un espace intérieur sans champ (24) formé dans l'électrode interne (9) .

26. Procédé selon la revendication 25,
dans lequel un mélange du gaz guidé dans l'espace intérieur (24) est effectué avec le gaz guidé dans l'espace de champ (17), en particulier au moyen d'une pluralité d'orifices de passage de gaz (29) réalisés dans l'électrode interne (9).

27. Procédé selon la revendication 25 ou 26,
dans lequel une tension alternative dans la plage d'environ 50 kV avec une fréquence d'environ 10 à 12 kHz est appliquée entre l'électrode externe (10) et l'électrode interne (9).

28. Procédé selon l'une des revendications 25 à 27,
dans lequel au moins un paramètre d'un gaz d'échappement généré lors du processus de combustion est détecté et la tension appliquée à l'applicateur de plasma (8) et/ou la fréquence appliquée sont régulées en fonction du paramètre.

29. Procédé selon la revendication 28,
dans lequel la fréquence et/ou la tension sont régulées de sorte que l'applicateur de plasma (8) fonctionne en résonance.
